# EUROPÄISCHE PATENTSCHRIFT

(11) **EP 0 971 140 B1**
(45) Veröffentlichungstag und Bekanntmachung des Hinweises auf die Patenterteilung: **28.03.2007**
(21) Anmeldenummer: 99112952.9
(22) Anmeldetag: 05.07.1999
(51) Int. Cl.: F16C 29/06, F16C 33/66

(54) **Linearführungseinrichtung mit Schmierungssystem**
Linear guiding device with lubricating system
Dispositif de guidage linéaire muni d'un système de lubrification

(30) Priorität: 06.07.1998 DE 19830140
(43) Veröffentlichungstag der Anmeldung: 12.01.2000
(73) Patentinhaber: Bosch Rexroth Mechatronics GmbH, 97424 Schweinfurt (DE)
(72) Erfinder: Pfeuffer, Viktor, Dipl.-Ing.(FH), 97072 Würzburg (DE)
(74) Vertreter: Herzog, Markus

(56) Entgegenhaltungen:
- EP-A- 0 874 172
- DE-A- 4 424 795
- DE-A- 19 828 587
- US-A- 5 582 486

## Beschreibung

Die Erfindung betrifft eine Linearführungseinrichtung, umfassend eine Führungsschiene mit einer Längsachse, mindestens einen Führungswagen, welcher auf der Führungsschiene unter Verwendung mindestens einer in einem Umlaufraum des Führungswagens umlaufenden Wälzkörperschleife in Richtung der Längsachse geführt ist, wobei diese Wälzkörperschleife eine tragende Wälzkörperreihe in gleichzeitigem Eingriff mit einer tragenden Laufbahn der Führungsschiene und mit einer tragenden Laufbahn des Führungswagens, ferner eine rücklaufende Wälzkörperreihe sowie zwei Umlenkbogen-Wälzkörperreihen aufweist, wobei weiter der Führungswagen von einem Wagenhauptkörper im Längenbereich der tragenden Wälzkörperreihe und von Kopfstückeinheiten an den axial beabstandeten Enden des Wagenhauptkörpers gebildet ist, wobei weiter Umlenkführungen für die Umlenkbogen-Wälzkörperreihen wenigstens zum Teil an diesen Kopfstückeinheiten ausgebildet sind, wobei weiter Schmierstoffbedarf an mindestens einem Teil der Wälzflächen besteht und zur Befriedigung dieses Schmierstoffbedarfs ein Schmierstoffwegesystem in dem Führungswagen vorgesehen ist, welches von einem Schmierstoffversorgungsraum des Führungswagens zu Wälzflächen führt, und wobei dieses Schmierstoffwegesystem wenigstens zum Teil in einem Grenzbereich zwischen mindestens einer Kopfstückeinheit und dem Wagenhauptkörper untergebracht ist.

Derartige Linearführungseinrichtungen sind aus der EP 0 211 243 A2, der US 4 850 720, der DE 42 10 299 C2 und der DE 44 24 795 A1 bekannt. Bei diesen bekannten Ausführungsformen umfaßt das Schmierstoffwegesystem in seinem wälzkörpernahen Endbereich jeweils einen Schmierstoffkanal innerhalb eines radial inneren Umlenkstücks einer Umlenkführung. Dieser Schmierstoffkanal mündet in eine Umlenkfläche des Umlenkstücks und damit in den Umlaufraum der Wälzkörper.

Nach der US 4 850 720 ist die Mündung des in dem radial inneren Umlenkstück verlaufenden Schmierstoffkanals als Drosselventil in Form einer engkalibrierten Bohrung ausgebildet, welche von dem Schmierstoffkanal in radialer Richtung zu der radial inneren Umlenkfläche des Umlenkstücks führt.

Nach der DE 42 10 299 C2 sind an der Ausmündung des Schmierstoffkanals in die radial innere Umlenkfläche Überdruckventile angeordnet, welche bei Erhöhung des Schmierstoffdrucks öffnen, ein Abfließen des Schmierstoffs unter der Einwirkung der Schwerkraft jedoch verhindern. Dieser Ausführungsform wird eine besondere Eignung für den Fall der Verwendung von niedrigviskosem Öl als Schmierstoff zugeschrieben. Die Überdruckventile liegen bei dieser Ausführungsform unmittelbar am Ausfluß in den Umlaufraum der Wälzkörper, d.h. an der radial inneren Umlenkfläche des Umlenkstücks.

Nach der DE 44 24 795 A1 erfolgt der Ausfluß von Schmieröl in den Umlaufraum der Wälzkörper durch Ausflußkanäle des radial inneren Umlenkkörpers, welche in die radial innere Umlenkfläche des Umlenkkörpers münden. Dabei gehen die Ausflußkanäle von einer gemeinsamen Drosselkammer aus, welche einen Schaumstoffstreifen aufnimmt. Wird ein Schmierölimpuls gegeben, so druchdringt das Öl den offenzelligen Schaumstoff, der als Drossel wirkt. Der Schaumstoff steht nicht in Berührung mit den Wälzkörpern. Das Schmieröl muß vielmehr nach Durchdringen des Schaumstoffs als Folge eines Druckimpulses die Ausflußkanäle von der Drosselkammer in den Umlaufraum durchfließen. Der Schaumstoffstreifen verhindert einen Ausfluß von Öl in den Umlaufraum dann, wenn kein Druckimpuls anliegt. Bei dieser Konzeption ist es nicht ausgeschlossen, daß durch einen oder mehrere aufeinander folgende Druckimpulse zu viel Öl in den Umlaufraum gelangt, so daß die Gefahr des Austretens des Schmieröls in die Umgebung besteht, wenn der Umlaufraum nicht öldicht abgedichtet ist. Andererseits besteht auch die Gefahr, daß zu wenig Schmieröl für die umlaufenden Wälzkörper zur Verfügung steht, wenn zwischen zwei aufeinander folgenden Druckimpulsen das in dem Umlaufraum enthaltene Schmieröl vorzeitig verbraucht ist.

Der Erfindung liegt das technische Problem zugrunde, bei Verwendung von Schmieröl als Schmierstoff dafür zu sorgen, daß im Umlaufraum langfristig immer ausreichend Schmieröl zur Verfügung steht, gleichzeitig aber auch dafür zu sorgen, daß keine Schmierölmengen über den jeweiligen Schmierbedarf hinaus in den Umlaufraum gelangen und aus diesem dann möglicherweise austreten können.

Zur Lösung dieser Aufgabe sieht die Erfindung die Merkmale des Anspruchs 1 vor.

Weiterbildungen sind in den abhängigen Ansprüche 2 bis 33 enthalten. Die Erfindung bezieht sich ausdrücklich auf die verstehenden Ansprüche 1 bis 33.

Wenn hier von einem Schmierstoffversorgungsraum die Rede ist, so ist das Volumen und die Form des Schmierstoffversorgungsraums völlig offengelassen. Der Schmierstoffversorgungsraum kann in Form einer oder mehrerer Kammern ausgebildet sein, kann aber auch einfach von einem stromaufwärtigen Teil des Schmierstoffwegesystems gebildet sein. Es soll auch keine Beschränkung hinsichtlich der Art der Schmierstoffbefüllung und -nachfüllung bestehen. Es ist denkbar, daß man periodisch Schmieröl etwa durch einen als Rückschlagventil ausgebildeten Schmiernippel in den Schmierstoffversorgungsraum eingibt. Es ist aber auch denkbar, daß man beim Hersteller oder beim Verwender vor Benutzungsbeginn eine Lebensdauerfüllung in den Schmierstoffversorgungsraum eingibt.

Bei der erfindungsgemäßen Lösung schlecken die Wälzkörper das Schmieröl von der Schmierölzuführkapillarleitung im jeweiligen Schleckbereich ab, wenn sich die Wälzkörper an diesem Schleckbereich rollend vorbeibewegen. Alternativ wird das Schmieröl von der Schmierölzuführkapillarleitung im jeweiligen Schleckbereich durch die Laufbahn der Führungsschiene abgeschleckt, wenn sich der Führungswagen entlang der Führungsschiene bewegt. In jedem Fall kann Schmieröl zu den Wälzkörpern bzw. der Laufbahn der Führungsschiene immer und nur dann gelangen, wenn eine Relativbewegung zwischen dem Schleckbereich der Schmierölzuführkapillarleitung einerseits und den Wälzkörpern oder der tragenden Laufbahn der Führungsschiene andererseits stattfindet. Die Schmierölzuführkapillarleitung ist entweder aufgrund ihres großen mit Schmieröl getränkten Volumens oder aufgrund ihrer Kommunikation mit freiem Schmieröl in dem Schmierstoffversorgungsraum geeignet, die Schmierölbenetzung der Wälzkörper bzw. der tragenden Laufbahn der Führungsschiene langfristig jeweils entsprechend dem Bedarf sicherzustellen. Natürlich muß man durch Einstellung verschiedener Parameter wie Permeabilität der Schmierölzuführkapillarleitung, Querschnitt dieser Kapillarleitung, Viskosität des Schmieröls sowie Größe des Kontaktbereichs der Kapillarleitung mit den Wälzkörpern bzw. der tragenden Laufbahn der Führungsschiene, bei der Konstruktion der Linearführungseinrichtung dafür sorgen, daß eine stets ausreichende Schmiermittelbenetzung im Betrieb gewährleistet ist. Eine Überfüllung des Umlaufraums mit Schmieröl, die zu einem unerwünschten Austritt von Schmieröl aus dem Umlaufraum führen könnte, ist bei dieser Konzeption zu keiner Zeit gegeben. Die Förderwirkung der Schmierölzuführkapillarleitung beruht im Gegensatz zu den vorbekannten Ventillösungen nicht auf einer Druckdifferenz, sondern auf einem Ölsättigungsgradienten in dem Kapillarmaterial. Dieser Sättigungsgradient kommt dadurch zustande, daß im Schleckbereich eine Ölentnahme aus der Schmierölzuführkapillarleitung stattfindet und die dadurch verursachte Ölverarmung im Schleckbereich laufend durch nachfließendes Öl aus dem Schmierstoffversorgungsraum kompensiert wird. Da die Ölförderung somit prinzipiell von Öldruck unabhängig ist, kann auch keine schwerkraftbedingte unterschiedliche Versorgung einzelner Schmierstellen eintreten. Es werden vielmehr alle Schmierstellen entsprechend der vorherigen Abstimmung gleichmäßig mit Schmieröl versorgt. Sollte im Schmierstoffversorgungsraum einmal ein Überdruck auftreten, so führt dieser in der Regel nicht zu einem Auftreten von Ölüberschuß in dem Umlaufraum, da die Schmierölzuführkapillarleitung schon aufgrund ihrer regelmäßig großen Länge jedenfalls bei kurzfristigem Auftreten von Überdruck in dem Schmierstoffversorgungsraum keinen Durchfluß in Richtung auf den Umlaufraum bewirkt, sondern allenfalls eine Ölanreicherung in dem stromaufwärtigen Abschnitt der Schmierölzuführkapillarleitung.

Die erfindungsgemäße Schmierölversorgung unterliegt insofern einer Selbstregelung, als bei Schmierölverarmung im wälzkörpernahen Bereich der Schmierölzuführkapillarleitung durch intensives Abschlecken von Schmieröl der Sättigungsgradient in der Schmierölzuführkapillarleitung größer wird und damit entsprechend auch die Schmierölförderung größer wird. Dieser Selbstregulierungseffekt wird auch noch dadurch unterstützt, daß bei Ölarmut an der Oberfläche der Wälzkörper bzw. der schienenseitigen Laufbahn eine größere Adhäsionswirkung im Sinne einer größeren Schmierölabnahme vom Schleckbereich der Kapillarleitung eintritt.

Die Länge der Schmierölzuführkapillarleitung ist grundsätzlich keinen Beschränkungen unterworfen. Überall dort, wo ein Teil der Schmierölzuführkapillarleitung in der Nähe ist, kann bei entsprechender Bemessung der Saugfähigkeit und Vermeidung bzw. Kleinhaltung von nicht mit Kapillarstoff gefüllten Schmieröltaschen mit einer Aufsaugung etwa auftretender freier Schmierölmengen gerechnet werden, so daß das Problem der Abdichtung im Grenzbereich zwischen Kopfstückeinheit und Wagenhauptkörper ausgeschaltet oder weitgehend entschärft ist.

Die Schmierölzuführkapillarleitung kann aus einem saugfähigen Textilmaterial, wie beispielsweise Filz, gebildet sein. Sie kann auch aus einem offenzelligen oder offenporigen, saugfähigen Material gebildet sein. Offenzelliger Schaumstoff, insbesondere aus einem Polymer-Kunststoff, kommt hier speziell in Frage. Bei diesen Materialien erfolgt der Schmieröltransport durch Kapillarwirkung in den Kapillaren oder Poren des jeweiligen Materials, und zwar unabhängig davon, ob von außen her ein Druckgefälle angelegt wird oder nicht. Ein solches Druckgefälle kann unter Umständen den Schmieröltransport in der Schmierölzuführkapillarleitung begünstigen, ist jedoch hierfür nicht ausschlaggebend. Wenn das Schmierstoffwegesystem neben der von der Schmierölzuführkapillarleitung aufgesaugten Ölmenge eine zusätzliche Menge an freiem Öl enthält, die einen Ölvorrat in dem Schmierstoffwegesystem bildet, entnimmt die Schmierölzuführkapillarleitung diesem Ölvorrat in gleichem Maße Öl, wie sie solches an ihrem Schleckbereich abgibt, so daß der Sättigungsgrad der Schmierölzuführkapillarleitung nicht abnimmt und eine nachlassende Nachschmierung der Wälzflächen nicht befürchtet werden muß.

Als alternatives Material zur Bildung der Schmierölzuführkapillarleitung hat sich ein Sintermetall erwiesen, beispielsweise Sinterbronze. Sintermetalle zeichnen sich durch eine hohe Verschleißfestigkeit aus, weswegen sie gut zur Bildung von Laufflächen herangezogen werden können, an denen die Wälzkörper der Wälzkörperschleifen in dem Umlaufraum entlanglaufen.

Aus der DE 30 12 018 A1 ist es bekannt, die Schmierung einer Wälzkörperschleife bei einem Wälzlager für Längsbewegungen dadurch sicherzustellen, daß ein Teil der Innenoberfläche des Umlaufraums von einer Führungsleiste gebildet ist, welche aus einem elastischen schmierölabgebenden Porösstoff besteht. Es ist dort jedoch keine Angabe darüber gemacht, wie das Schmieröl der Porösstoffleiste zugeführt wird.

Wie schon im oben diskutierten Stand der Technik kann der Führungswagen im wesentlichen U-förmig ausgebildet sein mit einem Stegbereich, welcher einer Kopffläche der Führungsschiene benachbart ist, und mit Schenkelbereichen, welche je einer Seitenfläche der Führungsschiene benachbart sind, wobei die tragende Wälzkörperreihe mindestens je einer Wälzkörperschleife zwischen je einem Schenkelbereich und je einer Seitenfläche der Führungsschiene angeordnet ist und die Schmierölzuführleitung entsprechend U-förmig über den Stegbereich und die Schenkelbereiche verläuft. Die Schmierölzuführkapillarleitung kann sich dann wenigstens annähernd über die Länge des Schenkelbereichs erstrecken, gewünschtenfalls auch zumindest über einen Teil des Stegbereichs. Insbesondere kann die Schmierölzuführkapillarleitung im wesentlichen U-förmig ausgebildet sein und sich von der tragenden Wälzkörperreihe der mindestens einen Wälzkörperschleife des einen Schenkelbereichs zu der tragenden Wälzkörperreihe der mindestens einen Wälzkörperschleife des anderen Schenkelbereichs erstrecken. Mit einer einzigen Schmierölzuführkapillarleitung kann so die gleichzeitige Versorgung mehrerer Wälzkörperschleifen mit Öl erreicht werden, und zwar speziell solcher Wälzkörperschleifen, die in verschiedenen Schenkelbereichen des Führungswagens untergebracht sind. Durch die Länge der Schmierölzuführkapillarleitung kann sich dann eine gewisse Speicherkapazität der Kapillarleitung für Schmieröl ergeben. Diese Speicherkapazität ist bevorzugt auf größere Zeiträume und entsprechend lange Betriebsphasen ohne nachfüllbedingte Unterbrechungen ausgelegt. Selbst wenn das Schmierstoffwegesystem zusätzliche Vorratsräume für freies Schmieröl enthält, kann ein wesentlicher Teil der gesamten in dem Schmierstoffwegesystem enthaltenen Ölmenge in der Schmierölzuführkapillarleitung gebunden sein. Unter Umständen kann die Speicherkapazität der Schmierölzüführkapillarleitung sogar auf die Lebensdauer der Linearführungseinrichtung ausgelegt sein.

Aus Platzgründen ist der Schmierstoffversorgungsraum zweckmäßigerweise im Stegbereich des U-förmigen Führungswagens angeordnet, insbesondere im Stegbereich mindestens einer Kopfstückeinheit. Außerdem ermöglicht diese Unterbringung des Schmierstoffversorgungsraums gleiche Leitungslängen zu den in verschiedenen Schenkelbereichen des Führungswagens untergebrachten Wälzkörperschleifen.

Es hat sich gezeigt, daß die Laufeigenschaften der Wälzkörper durch den Schleckkontakt mit der Schmierölzuführkapillarleitung nicht, zumindest jedoch nicht wesentlich, gestört werden. Deshalb kann der Schleckbereich auch ohne weiteres vergleichsweise großflächig sein, was die gleichmäßige Ölversorgung aller Wälzkörper verbessert. Bevorzugt erstreckt sich der Schleckbereich dabei über wenigstens einen Teil, insbesondere einen wesentlichen Teil, der Länge der tragenden oder/und der rücklaufenden Wälzkörperreihe. Grundsätzlich kann die Schmierölzuführkapillarleitung mit ihrem Schleckbereich in den Umlaufraum der Wälzkörperschleifen nach Art einer Nase etwas hineinragen. Vorzugsweise ist der Schleckbereich aber von einer Lauffläche des Umlaufraums gebildet. Der Schleckbereich fügt sich dann bündig in das Laufflächensystem des Umlaufraums ein, was eventuelle Störungen der Laufruhe durch die Schmierölzuführkapillarleitung weiter reduziert.

Das Schmierstoffwegesystem kann wenigstens zum Teil in einer Zwischenplatteneinheit untergebracht sein, welche zwischen einem axialen Ende des Wagenhauptkörpers und der zugehörigen Kopfstückeinheit angeordnet ist. Dabei empfiehlt es sich, daß die Zwischenplatteneinheit wenigstens zum Teil aus schmieröldichtem Werkstoff, insbesondere Kunststoff, besteht. Zur Abdichtung der in der Zwischenplatteneinheit untergebrachten Teile des Schmierstoffwegesystems ist es zweckmäßig, wenn die Zwischenplatteneinheit an dem Wagenhauptkörper und/oder an der Kopfstückeinheit schmieröldicht anliegt.

Die Zwischenplatteneinheit kann eine Ausnehmung zur wenigstens teilweisen Aufnahme der Schmierölzuführkapillarleitung aufweisen. Wenn die Ausnehmung wenigstens auf einem Teil ihrer in Umfangsrichtung der Führungsschiene verlaufenden Länge von der Schmierölzuführkapillarleitung im wesentlichen vollständig ausgefüllt ist, ist ein freier Schmierölfluß, der zu einem unerwünschten Auslaufen von Schmieröl führen könnte, in der Ausnehmung ausgeschlossen. Die Ausnehmung ist bevorzugt reliefartig in der Zwischenplatteneinheit ausgebildet und liegt zum Wagenhauptkörper hin frei. Die Verbindung der Ausnehmung mit dem bevorzugt in dem Kopfstück untergebrachten Schmierstoffversorgungsraum kann dann einfach dadurch hergestellt sein, daß die Ausnehmung Verbindungsöffnungen aufweist.

Herstellungs- und montageerleichternd ist es, wenn an der Zwischenplatteneinheit eine bogeninnere Umlenkfläche für die jeweilige Umlenkbogen-Wälzkörperreihe angebracht ist. Insbesondere kann ein die Umlenkfläche aufweisender Umlenkkörper integral an der Zwischenplatteneinheit angeformt sein. Die Zwischenplatteneinheit wird bevorzugt als Kunststoff-Formteil in einem Spritzgieß-Verfahren hergestellt. Zur Erfüllung der hohen Anforderungen an die Führungsgenauigkeit der Umlenkflächen kann für die Zwischenplatteneinheit auch ein vergleichsweise harter Kunststoff verwendet werden. Wenn die Ausnehmung auf der zum Wagenhauptkörper hin gelegenen Seite der Zwischenplatteneinheit in diese eingeformt ist, wird die bogeninnere Umlenkfläche zweckmäßigerweise auf der von der reliefartigen Ausnehmung abgelegenen Seite der Zwischenplatteneinheit angeformt sein.

Wenn in mindestens einem Schenkelbereich des Führungswagens eine Mehrzahl von Wälzkörperschleifen vorgesehen ist, empfiehlt es sich, daß die Schmierölzuführkapillarleitung in Schleckkontakt mit den Wälzkörpern mehrerer Wälzkörperschleifen steht.

Es besteht gelegentlich die Forderung, daß eine Linearführungseinrichtung der hier betrachteten Art wahlweise mit Schmierfett, mit hochviskosem Schmieröl oder mit niedrigviskosem Schmieröl gefüllt wird. Zur Vereinfachung wird im folgenden nur zwischen Schmierfett oder Schmieröl differenziert. Es ist grundsätzlich denkbar bei der erfindungsgemäßen Linearführungseinrichtung, neben der für die Zuführung von Schmieröl bestimmten Schmierölzuführkapillarleitung eine gesonderte Schmierfettzuführleitung vorzusehen, welche von einem gesonderten Schmierfettvorratsraum (ggf. mit Schmierfettnachfüllnippel) zu einer gesonderten Schmierfettabgabestelle an dem Umlaufraum bzw. an der Laufbahn der Führungsschiene führt. Eine solche Lösung soll im Rahmen der Weiterbildung der Erfindung nicht ausgeschlossen sein.

Bevorzugt wird zur Erfüllung der Forderung nach einer Alternativschmierung mit Schmierfett oder mit Schmieröl allerdings vorgesehen, daß das Schmierstoffwegesystem neben der Schmierölzuführkapillarleitung eine Schmierfettzuführleitung von dem gemeinsamen Schmierstoffversorgungsraum zu mindestens einer von dem Schleckbereich gesonderten Schmierfettmündungsstruktur umfaßt, an welcher die Schmierfettzuführleitung in den Umlaufraum oder in die Laufbahn der Führungsschiene einmündet. Dabei ist es möglich, daß die Schmierfettzuführleitung und die Schmierölzuführkapillarleitung wenigstens auf einem Teil ihrer Länge parallel zueinander verlaufen, wobei die Schmierölzuführkapillarleitung mindestens einen Teil der Querschnittsbegrenzung der Schmierfettzuführleitung bildet. Damit hat es folgende Bewandtnis: Wenn die Schmierölzuführleitung und die Schmierfettzuführleitung von einem gemeinsamen Schmierstoffversorgungsraum ausgehen, so steht, solange nicht besondere Maßnahmen dagegen getroffen sind, die Schmierfettzuführleitung grundsätzlich auch dem Schmieröl zur Verfügung. Man kann aber nicht dulden, daß das Öl durch den Schmierfettweg frei ausläuft, sei es in den Umlaufraum der Wälzkörperschleife, sei es zu der Laufbahn der Führungsschiene. Man kann den Durchgang von freiem Schmieröl durch den Schmierfettweg verhindern, indem man in den Schmierfettweg eine Absperrstelle legt, die von einem beim Nachfüllen von Schmierfett zu erwartenden Schmierfettdruck geöffnet wird, von dem Schmieröl aber nicht durchsetzt werden kann, weil das Schmieröl - wie schon weiter oben ausgeführt - keines Förderdrucks bedarf und auch beim Nachfüllen von Schmieröl geringe Drücke ausreichend sind. Nicht auszuschließen ist, daß ungebundenes Schmieröl jedenfalls bis zu der Absperrstelle in dem Schmierfettweg auftritt, insbesondere beim Nachfüllen von Schmieröl.

In diesem Fall erweist es sich als vorteilhaft, wenn die Querschnittsbegrenzung der Schmierfettzuführleitung wenigstens zum Teil von der Schmierölzuführkapillarleitung gebildet ist, weil dann ein Aufsaugen des ungebundenen Schmieröls aus der Schmierfettzuführleitung in die Schrriierölzuführkapillarleitung möglich ist. Diese Aufsaugwirkung kann verstärkt werden, wenn die Schmierfettzuführleitung wenigstens auf einem Teil ihrer Länge in einem Schlitz der Schmierölzuführkapillarleitung verläuft. Alternativ kann die Schmierfettzuführleitung auch in einer reliefartigen Ausnehmung der Schmierölzuführkapillarleitung verlaufen oder vollständig von dieser umschlossen sein.

Die Schmierölzuführkapillarleitung kann wenigstens teilweise in einer Zwischenplatteneinheit untergebracht sein, welche im Bereich einer Umlenkbogen-Wälzkörperreihe einen bogeninneren Umlenkkörper bildet, wobei im Anschluß an einen von der Schmierölzuführkapillarleitung wenigstens teilweise begrenzten Leitungsabschnitt der Schmierfettzuführleitung diese innerhalb des Umlenkkörpers bis zu mindestens einer Schmierfettmündungsstruktur fortgesetzt ist. Wenn der Umlenkkörper einer Mehrzahl von Wälzkörperschleifen gemeinsam ist, empfiehlt es sich, daß die Schmierfettzuführleitung innerhalb des Umlenkkörpers zu mehreren Wälzkörperschleifen hin verzweigt ist. Besonders günstig ist es, wenn der Umlenkkörper zwischen zwei nebeneinander liegenden Umlenkflächen für benachbarte Wälzkörperschleifen eine Schmierfettmündungsstruktur besitzt. Die Verzweigung der Schmierfettzuführleitung erfolgt dann erst kurz vor den zu versorgenden Wälzkörperschleifen, was nahezu identische Schmierverhältnisse an den Wälzkörperschleifen gewährleistet.

Die bereits erwähnte Absperrstelle der Schmierfettzuführleitung liegt bevorzugt stromaufwärts der Schmierfettmündungsstruktur. An der Schmierfettmündungsstruktur selbst braucht dann eine weitere Drossel- oder Absperrstelle nicht vorgesehen zu sein, da das Schmierfett aufgrund seiner hohen Viskosität ohnehin nicht unkontrolliert zu dem Umlaufraum bzw. zu der Laufbahn der Führungsschiene hin entweichen kann. Die Verlagerung der Schmierfettabsperrstelle an eine Stelle stromaufwärts der Schmierfettmündungsstruktur erweist sich konstruktiv als vorteilhaft. Wenn die Absperrstelle nicht mehr unmittelbar am Ausfluß zu dem Umlaufraum bzw. zu der Laufbahn der Führungsschiene liegt, so kann man sich für die Lokalisierung der Absperrstelle den günstigsten Platz aussuchen, um die Absperrstelle einfach und dicht zu gestalten.

Es kann vorteilhaft sein, wenn auch stromabwärts der Absperrstelle noch Kommunikation zwischen der Schmierfettzuführleitung und der Schmierölzuführkapillarleitung besteht, weil dann unbeabsichtigterweise durch die Absperrstelle hindurch gelangtes Schmieröl stromabwärts der Absperrstelle von der Schmierölzuführkapillarleitung wieder aufgesaugt werden kann.

Es kann vorgesehen sein, daß an dem Führungswagen eine Mehrzahl von wahlweise zur Schmierstoffeingabe benutzbaren Schmierstoffeingabeanschlüssen angebracht ist, daß einzelnen oder Gruppen solcher Schmierstoffeingabeanschlüsse jeweils ein Ventilelement zugeordnet ist und daß diese Ventilelemente voneinander derart unabhängig sind, daß bei Anlegen eines vorbestimmten Schmierstoffeingabedrucks an einem der Schmierstoffeingabeanschlüsse nur das diesem zugehörige Ventilelement öffnet. Durch diese Maßnahme werden die einzelnen Schmierstoffeingabeanschlüsse voneinander entkoppelt. Bei Einfüllung von Schmierstoff an einem der Schmierstoffeingabeanschlüsse wird der sofortige Wiederaustritt von soeben nachgefülltem Schmierstoff an den übrigen Schmierstoffeingabeanschlüssen verhindert, da die diesen übrigen Schmierstoffeingabeanschlüssen zugeordneten Ventilelemente geschlossen bleiben. Die übrigen Schmierstoffeingabeanschlüsse müssen dann nicht mit Blindstopfen verschlossen werden, was sich kostensparend auswirkt. Die Ventilelemente sind bevorzugt innerhalb einer Kopfstückeinheit und/oder an einer Zwischenplatteneinheit angebracht, welche zwischen der Kopfstückeinheit und dem Wagenhauptkörper liegt. Die insbesondere in Form von Rückschlagventilen ausgebildeten Ventilelemente können aus dem jeweiligen Werkstoff der Kopfstückeinheit bzw. der Zwischenplatteneinheit gebildet sein, vorzugsweise einstückig mit der Kopfstückeinheit bzw. der Zwischenplatteneinheit.

Grundsätzlich ist es denkbar, ein von außerhalb des Führungswagens her nicht zugängliches, in sich abgeschlossenes Schmierstoffwegesystem vorzusehen, das hersteller- oder anwenderseitig einmal mit einer für die Lebensdauer der Linearführungseinrichtung reichenden Schmierstoffmenge gefüllt wird. Alternativ sind an dem Führungswagen Schmierstoffeingabemittel angeordnet, welche an den Schmierstoffversorgungsraum angeschlossen sind, so daß eine Nachbefüllung des Schmierstoffwegesystems möglich ist. Da die unterschiedlichen Eigenschaften von Schmierfett und Schmieröl im Bereich der Schmierstoffeingabe unkritisch sind, empfiehlt es sich aus Platz- und Preisgründen, daß der Schmierstoffversorgungsraum durch ein gemeinsames Schmierstoffeingabemittel wahlweise mit Schmieröl oder mit Schmierfett beschickbar ist.

Für die Komponenten des Führungswagens, insbesondere für eine Kopfstückeinheit des Führungswagens, kommen häufig Kunststoffmaterialien zum Einsatz, die eine leichte Fertigung im Rahmen von Gieß- oder Spritzgieß-Verfahren erlauben. Dementsprechend kann es vorkommen, daß die Schmierstoffeingabemittel an einem Kunststoffteil, insbesondere an einer Kopfstückeinheit des Führungswagens, angebracht sind. Für diesen Fall wird empfohlen, daß die Schmierstoffeingabemittel eine Mehrzahl von Schmierstoffeingabeanschlüssen umfassen und daß an dem Kunststoffteil ein Armierungsteil, insbesondere aus metallischem Werkstoff, angebracht ist, welcher Anschlußkomponenten für die Schmierstoffeingabeanschlüsse trägt. Das widerstandsfähige Material des Armierungsteils vermeidet Beschädigungen der Schmierstoffeingabeanschlüsse, die durch unsachgemäßes Einschrauben eines Schmiernippels oder durch unsachgemäßes Anschließen eines Schmierstofffüllgeräts entstehen könnten. Insbesondere kann vorgesehen sein, daß die Anschlußkomponenten als Innengewindebuchsen ausgebildet sind, welche mit jeweils einer Anschlußbohrung der Schmierstoffeingabeanschlüsse in Deckung stehen. In die Innengewindebuchse eines der Schmierstoffeingabeanschlüsse kann dann ein Schmiernippel zur Nachfüllung von Schmierstoff eingeschraubt werden, während in die Innengewindebuchsen der übrigen Schmierstoffeingabeanschlüsse bei Bedarf ein Verschluß, beispielsweise aus Kunststoff, eingesetzt werden kann.

Nach einer anderen Betrachtungsweise betrifft die Erfindung eine Linearführungseinrichtung, umfassend eine Führungsschiene mit einer Längsachse, mindestens einen Führungswagen, welcher auf der Führungsschiene unter Verwendung mindestens einer in einem Umlaufraum des Führungswagens geführten Wälzkörperschleife in Richtung der Längsachse geführt ist, wobei diese Wälzkörperschleife eine tragende Wälzkörperreihe in gleichzeitigem Eingriff mit einer tragenden Laufbahn der Führungsschiene und mit einer tragenden Laufbahn des Führungswagens, ferner eine rücklaufende Wälzkörperreihe sowie zwei Umlenkbogen-Wälzkörperreihen aufweist, wobei Schmierstoffbedarf an mindestens einem Teil der Wälzflächen besteht und zur Befriedigung dieses Schmierstoffbedarfs ein Schmierstoffwegesystem in dem Führungswagen vorgesehen ist, welches von einem Schmierstoffversorgungsraum des Führungswagens zu Wälzflächen führt, wobei diese Linearführungseinrichtung insbesondere nach der vorstehend beschriebenen Art ausgestaltet ist. Erfindungsgemäß ist dabei vorgesehen, daß an den Schmierstoffversorgungsraum eine Schmierölzuführleitung und eine Schmierfettzuführleitung angeschlossen sind, daß die Schmierölzuführleitung auf wenigstens einem Teil ihrer Länge von einer druckgefälleunabhängig fördernden Schmierölzuführkapillarleitung gebildet ist, welche in mindestens einem Schleckbereich in Schleckkontakt mit Wälzkörpern der mindestens einen Wälzkörperschleife oder mit der tragenden Laufbahn der Führungsschiene steht, daß die Schmierfettzuführleitung an mindestens einer Schmierfettmündungsstruktur in den Umlaufraum oder die tragende Laufbahn der Führungsschiene einmündet und daß in der Schmierfettzuführleitung stromaufwärts der Schmierfettmündungsstruktur eine Absperreinrichtung vorgesehen ist, welche durch Schmierfettdruck geöffnet werden kann.

Die Schmierölzuführkapillarleitung nimmt bevorzugt mindestens einen wesentlichen Teil der Länge der Schmierölzuführleitung zwischen dem Schmierstoffversorgungsraum und dem Schleckbereich ein. Der Schleckbereich kann sich wiederum über mindestens einen wesentlichen Teil der Länge der tragenden oder/und der rücklaufenden Wälzkörperreihe erstrecken. Die Schmierölzuführkapillarleitung kann als Abdichtung für druckgefällebedingten freien Schmieröl- und Schmierfettzufluß zu dem Schleckbereich wirksam sein, insofern, als sie für Schmierfett grundsätzlich unpassierbar ist und sie außerdem so in der Schmierölzuführleitung angeordnet ist, daß ein freier Schmierölfluß an der Schmierölzuführkapillarleitung vorbei nicht möglich ist, sondern daß das Schmieröl nur durch die Schmierölzuführkapillarleitung zu dem Schleckbereich gelangen kann und dabei so stark gedrosselt wird, daß die Ölabgabe an dem Schleckbereich im wesentlichen drucklos nur durch Abschlecken erfolgt. Dagegen ist es für die Schmierfettzuführleitung zweckmäßig, wenn sie in ihrem Abschnitt stromabwärts der Absperreinrichtung im wesentlichen drosselfrei ist, so daß unnötige Druckverluste vermieden werden können.

Nach noch einer weiteren Betrachtungsweise betrifft die Erfindung eine Linearführungseinrichtung, umfassend eine Führungsschiene mit einer Längsachse, mindestens einen Führungswagen, welcher auf der Führungsschiene unter Verwendung mindestens einer in einem Umlaufraum des Führungswagens umlaufenden Wälzkörperschleife in Richtung der Längsachse geführt ist, wobei diese Wälzkörperschleife eine tragende Wälzkörperreihe in gleichzeitigem Eingriff mit einer tragenden Laufbahn der Führungsschiene und mit einer tragenden Laufbahn des Führungswagens, ferner eine rücklaufende Wälzkörperreihe sowie zwei Umlenkbogen-Wälzkörperreihen aufweist, wobei weiter der Führungswagen einen Wagenhauptkörper im Längenbereich der tragenden Wälzkörperreihe und Kopfstückeinheiten axial beidseits des Wagenhauptkörpers aufweist, wobei weiter Umlenkführungen für die Umlenkbogen-Wälzkörperreihen wenigstens zum Teil an diesen Kopfstückeinheiten ausgebildet sind, wobei weiter ein Schmierstoffversorgungssystem in dem Führungswagen vorgesehen ist, welches zu Schmierbedarfszonen führt, und wobei dieses Schmierstoffversorgungssystem wenigstens zum Teil in einem Grenzbereich zwischen mindestens einer Kopfstückeinheit und dem Wagenhauptkörper untergebracht ist, wobei diese Linearführungseinrichtung insbesondere nach einer oder beiden vorstehend erläuterten Arten ausgestaltet sein kann.

Erfindungsgemäß ist bei dieser Betrachtungsweise vorgesehen, daß eine wenigstens zum Teil in dem Grenzbereich annähernd in Umfangsrichtung der Führungsschiene verlaufende Schmierstoffversorgungsstrecke des Schmierstoffversorgungssystems wenigstens auf einem Teil ihrer Länge von einer Schmierkörperanordnung aus Schmierstoff speicherndem Material gebildet ist, welche mit einem Schmierstoffabgabebereich in Benetzungskontakt mit Wälzkörpern der mindestens einen Wälzkörperschleife oder/und mit Oberflächenbereichen der Führungsschiene angeordnet ist.

Die Schmierkörperanordnung kann aus einem Schmieröl durch Kapillarwirkung fördernden Saugmaterial gebildet sein, so daß die Benetzung der Wälzkörper oder der Führungsschiene durch Abschlecken von Schmieröl von der Schmierkörperanordnung erfolgen kann.

Die Schmierkörperanordnung kann alternativ aus einem Material gebildet sein, dessen Zusammensetzung wenigstens einen Schmierstoffanteil aufweist. Beispielsweise kann die Materialzusammensetzung der Schmierkörperanordnung einen Grundstoff aufweisen, dem bei der Herstellung der Schmierkörperanordnung ein Schmierstoff beigemischt wurde. Ebenso kann die Schmierkörperanordnung aus einem Festschmierstoff bestehen, etwa aus Graphit. Bei einigen dieser Materialien kann Schmierstoff nahezu ohne mechanischen Druck abgeschleckt werden. Bei anderen Materialen kann die Einwirkung von Wärme und/oder mechanischem Druck erforderlich sein, damit Schmierstoff aus dem Materialgefüge der Schmierkörperanordnung freigegeben wird und an die Wälzkörper oder die Führungsschiene abgegeben werden kann. Der Benetzungskontakt ist jedenfalls stets so gestaltet, daß bei einer Relativbewegung zwischen Führungswagen und Führungsschiene Schmierstoff von der Schmierkörperanordnung auf die Wälzkörper oder die Führungsschiene übertragen wird, sei es in flüssiger oder verflüssigter Form oder in pastöser Form oder sei es in Form von Feinstpartikeln.

Eine Weiterbildung der Erfindung nach dieser dritten Betrachtungsweise sieht vor, daß der Führungswagen im wesentlichen U-förmig ausgebildet ist mit einem Stegbereich, welcher einer Kopffläche der Führungsschiene benachbart ist, und mit Schenkelbereichen, welche je einer Seitenfläche der Führungsschiene benachbart sind, daß zwischen jedem Schenkelbereich und der jeweils benachbarten Seitenfläche die tragende Wälzkörperreihe je mindestens einer Wälzkörperschleife angeordnet ist und daß sich die Schmierkörperanordnung annähernd über die Länge jedes der Schenkelbereiche erstreckt. Insbesondere kann die Schmierkörperanordnung U-förmig ausgebildet sein und sich auch zumindest über einen Teil des Stegbereichs erstrecken. Das Speichervermögen der Schmierkörperanordnung kann auf diese Weise so groß gemacht werden, daß es unter Umständen sogar für die Lebensdauer der Linearführungseinrichtung ausreicht.

Die Schmierkörperanordnung kann Teil einer Zwischenplatteneinheit sein, welche axial zwischen einem axialen Ende des Wagenhauptkörpers und der zugehörigen Kopfstückeinheit angeordnet ist. Sofern die Schmierkörperanordnung aus einem festen, formstabilen Material besteht, ist es sogar denkbar, die Schmierkörperanordnung ungehäust zwischen der Kopfstückeinheit und dem Wagenhauptkörper anzuordnen. Aus Abdichtungsgründen und zum Schutz vor mechanischer Beschädigung wird die Zwischenplatteneinheit jedoch zweckmäßigerweise einen schmierstoffdichten Gehäusekörper umfassen, in dem die Schmierkörperanordnung untergebracht ist.

Unter der Voraussetzung einer ausreichenden Formstabilität ist es sogar möglich, daß ein Teil der Umlenkführung einer Umlenkbogen-Wälzkörperreihe, insbesondere eine bogeninnere Umlenkfläche, an der Schmierkörperanordnung ausgebildet ist. Auf diese Weise kann ein großflächiger Schmierbereich für die Wälzkörper geschaffen werden. Zudem läßt sich hierdurch die Herstellung der Kopfstückeinheiten vereinfachen.

Die Schmierbedarfszonen können bei den Wälzflächen der Linearführungseinrichtung, aber auch außerhalb dieser Wälzflächen liegen. Beispielsweise kann eine Schmierung der Führungsschienenoberfläche auch außerhalb ihrer tragenden Laufbahn gewünscht sein, um eine Dichtung des Führungswagens, mit der dieser gegenüber der Führungsschiene abgedichtet ist, geschmeidig zu halten. Soweit eine Schmierung der Wälzflächen erwünscht ist, kann diese dadurch erreicht werden, daß die Schmierkörperanordnung mit ihrem Schmierstoffabgabebereich mindestens einen Teil der tragenden Laufbahn des Führungswagens oder/und einer Rücklaufführung für die rücklaufende Wälzkörperreihe bildet. Insbesondere kann vorgesehen sein, daß die Rücklaufführung mindestens auf einem Teil ihrer Länge vollständig in der Schmierkörperanordnung verläuft.

Falls ein Benetzungskontakt zwischen der Schmierkörperanordnung und den Wälzkörpern gewünscht ist, wird man bei der Ausgestaltung dieses Benetzungskontakts berücksichtigen müssen, daß die Abrollbewegung der Wälzkörper nicht oder zumindest nicht wesentlich beeinträchtigt wird. Andererseits soll der Benetzungskontakt aber auch eine ausreichende Versorgung der Wälzkörper mit Schmierstoff sicherstellen. Zur Erfüllung dieser Forderungen kann der Führungswagen eine in den Umlaufraum ragende, vorzugsweise elastische Andrücklippenanordnung aufweisen, welche die Wälzkörper in Kontakt mit dem Schmierstoffabgabebereich drückt. Insbesondere bei ausreichender Flexibilität der Andrücklippenanordnung kann ein nahezu ungehinderter Durchlauf der Wälzkörper durch den Umlaufraum sichergestellt werden. Gleichzeitig kann mittels der Andrücklippenanordnung erreicht werden, daß die Wälzkörper in einem möglichst großflächigen Kontaktbereich an der Schmierkörperanordnung entlang laufen. Insbesondere ist es denkbar, daß die Andrücklippenanordnung von der Schmierkörperanordnung gebildet ist.

Grundsätzlich ist es auch möglich, daß die Schmierkörperanordnung einen Schmierkörper umfaßt, welcher durch eine Federeinrichtung federnd in Kontakt mit den Wälzkörpern oder/und den Oberflächenbereichen der Führungsschiene vorgespannt ist. Auf diese Weise kann ebenfalls ein sicherer Kontakt der Schmierbedarfszonen mit der Schmierkörperanordnung erreicht werden.

Die Erfindung wird im folgenden anhand der beigefügten Zeichnungen näher erläutert. Es stellen dar:
- Fig. 1: eine perspektivische Gesamtdarstellung eines Ausführungsbeispiels der erfindungsgemäßen Linearführungseinrichtung;
- Fig. 2: eine perspektivische Explosionsdarstellung einer Kopfbaugruppe eines Führungswagens der Linearführungseinrichtung der Fig. 1;
- Fig. 3: ein Kopfstück und eine Zwischenplatte der Kopfbaugruppe der Fig. 2, gesehen in Blickrichtung des Pfeils III in Fig. 2;
- Fig. 4: das Kopfstück und die Zwischenplatte der Fig. 3, gesehen in Blickrichtung des Pfeils IV in Fig. 3;
- Fig. 5: die Kopfbaugruppe der Fig. 2 in einem zusammengebauten Zustand in einer Ansicht ähnlich Fig. 3, jedoch ohne eine in die Zwischenplatte einzulegende Schmiereinsatzplatte;
- Fig. 6: die linke Hälfte der in Fig. 5 gezeigten Kopfbaugruppe, jedoch mit eingelegter Schmiereinsatzplatte;
- Fig. 7: in perspektivischer Darstellung eine in eine Rücklaufbohrung des Führungswagens einzulegende Schmierhalbschale;
- Fig. 8: in perspektivischer Darstellung die Zwischenplatten zweier Kopfbaugruppen des Führungswagens mit dazwischen angeordneten Schmierhalbschalen;
- Fig. 9: eine perspektivische Explosionsansicht des Kopfstücks, einer Abstreiferdichtplatte und einer Armierungsplatte der Kopfbaugruppe, gesehen in Blickrichtung des Pfeils IX in Fig. 2;
- Fig. 10: einen Längsschnitt durch ein weiteres Ausführungsbeispiel der erfindungsgemäßen Linearführungseinrichtung;
- Fig. 11: einen längs der Linie XI-XI der Fig. 10 genommenen Querschnitt und
- Fig. 12: einen Längsschnitt durch ein weiteres Ausführungsbeispiel der erfindungsgemäßen Linearführungseinrichtung.

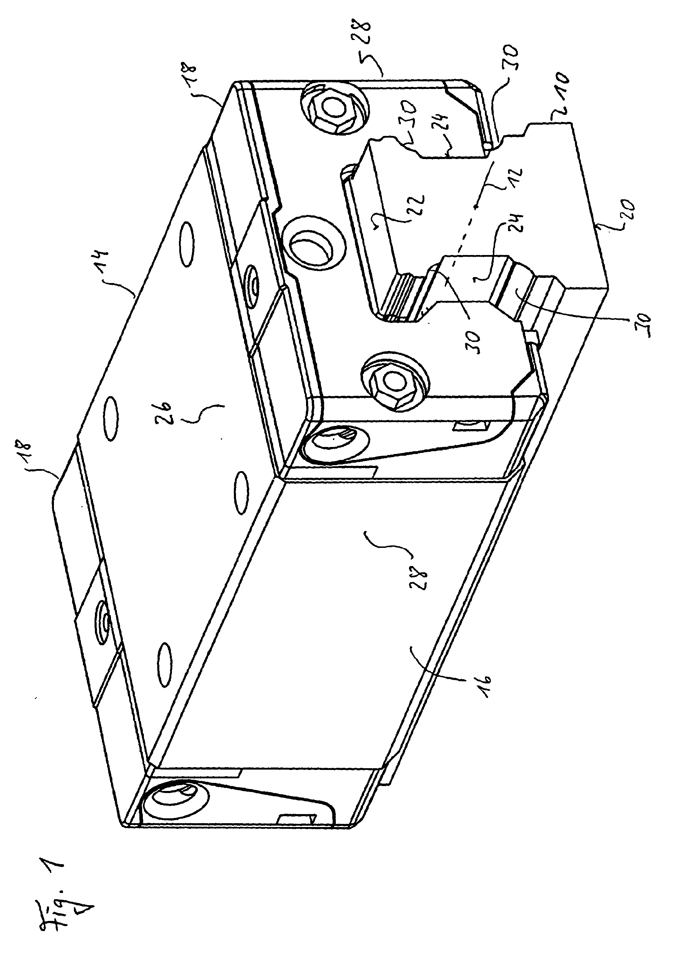

In Fig. 1 erkennt man einen auf einer Führungsschiene 10 in Richtung einer Schienenachse 12 geführten Führungswagen 14 mit einem Wagenhauptkörper 16 und zwei an den beiden axial gegenüberliegenden Enden des Wagenhauptkörpers 16 angebrachten Kopfbaugruppen 18. Die Führungsschiene 10 weist eine Befestigungsfläche 20, mit der sie auf einer nicht näher dargestellten Tragbasis befestigbar ist, eine der Befestigungsfläche 20 gegenüberliegende Kopffläche 22 sowie zwei Seitenflächen 24 auf. Der Führungswagen 14 umgreift die Führungsschiene 10 im wesentlichen U-förmig, wobei er einen der Kopffläche 22 benachbarten Stegbereich 26 sowie zwei durch den Stegbereich 26 miteinander verbundene, je einer der Seitenflächen 24 benachbarte Schenkelbereiche 28 aufweist. In jedem der Schenkelbereiche 28 sind jeweils zwei in Fig. 1 nicht näher dargestellte, endlos umlaufende Wälzkörperschleifen untergebracht, deren tragende Wälzkörperreihen jeweils an einer in der zugehörigen Seitenfläche 24 ausgebildeten tragenden Laufbahn 30 der Führungsschiene 10 abrollen. Für die rücklaufenden Wälzkörperreihen der Wälzkörperschleifen ist in dem Wagenhauptkörper 16 jeweils eine axial durchgehende Rücklaufbohrung (nicht dargestellt) vorgesehen, während in den Kopfbaugruppen 18 Umlenkführungen für Umlenkbogen-Wälzkörperreihen jeder der Wälzkörperschleifen untergebracht sind. Die Laufbahnen 30 der Führungsschiene 10 sind im gezeigten Ausführungsbeispiel für Kugelreihen ausgebildet. Es versteht sich, daß auch beliebige andere Wälzkörperformen in Frage kommen, etwa Rollen, Tonnen oder Nadeln.

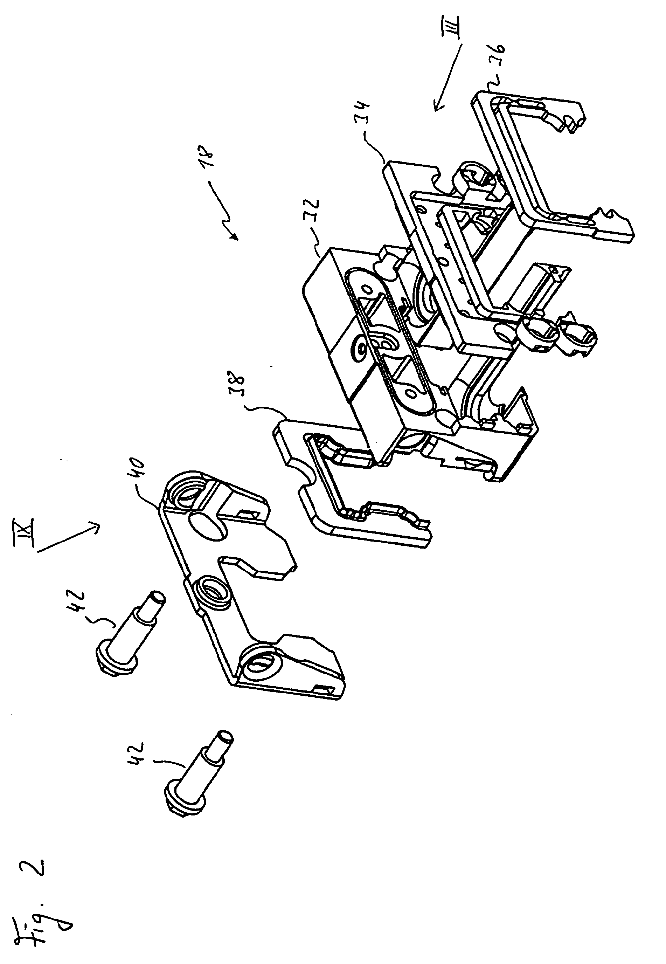

In Fig. 2 erkennt man, daß sich die Kopfbaugruppen 18 jeweils aus einem Kopfstück 32, einer Zwischenplatte 34, einer Schmiereinsatzplatte 36, einer Abstreiferdichtplatte 38, einer Armierungsplatte 40 sowie aus Befestigungsschrauben 42 zusammensetzen, mit denen die zuvor genannten Komponenten an dem Wagenhauptkörper 16 des Führungswagens 14 befestigt werden. Die Zwischenplatte 34 und die Schmiereinsatzplatte 36 sind dabei zwischen dem Kopfstück 32 und dem Wagenhauptkörper 16 angeordnet, während die Abstreiferdichtplatte 38 und die Armierungsplatte 40 von der dem Wagenhauptkörper 16 axial abgewandten Seite des Kopfstücks 32 her an diesem angebracht werden. Die Komponenten der Kopfbaugruppen 18 sind in bezug auf eine achsparallele Längsmittelebene der gesamten Linearführungseinrichtung symmetrisch ausgebildet.

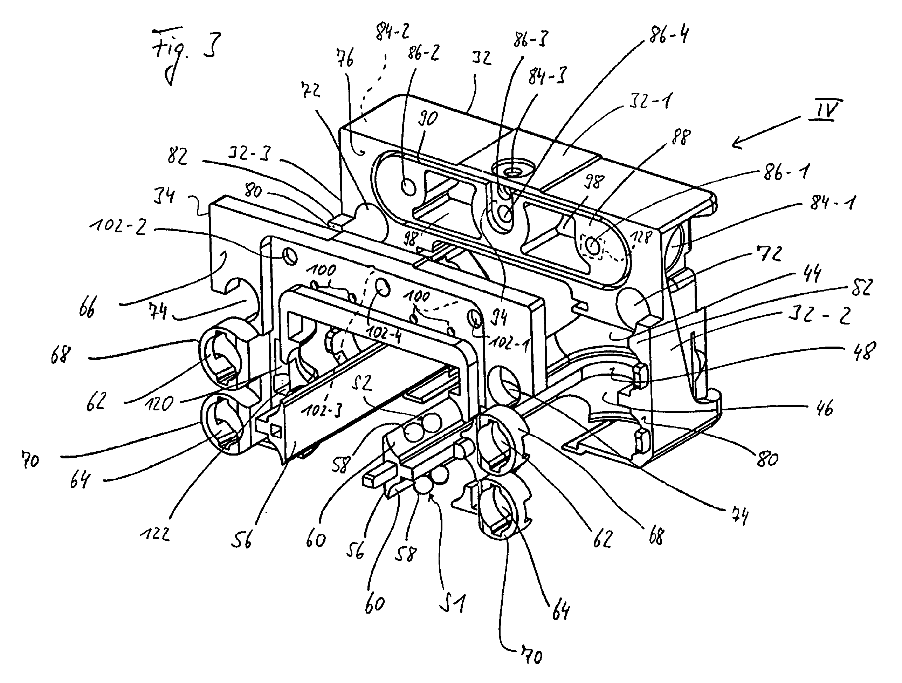

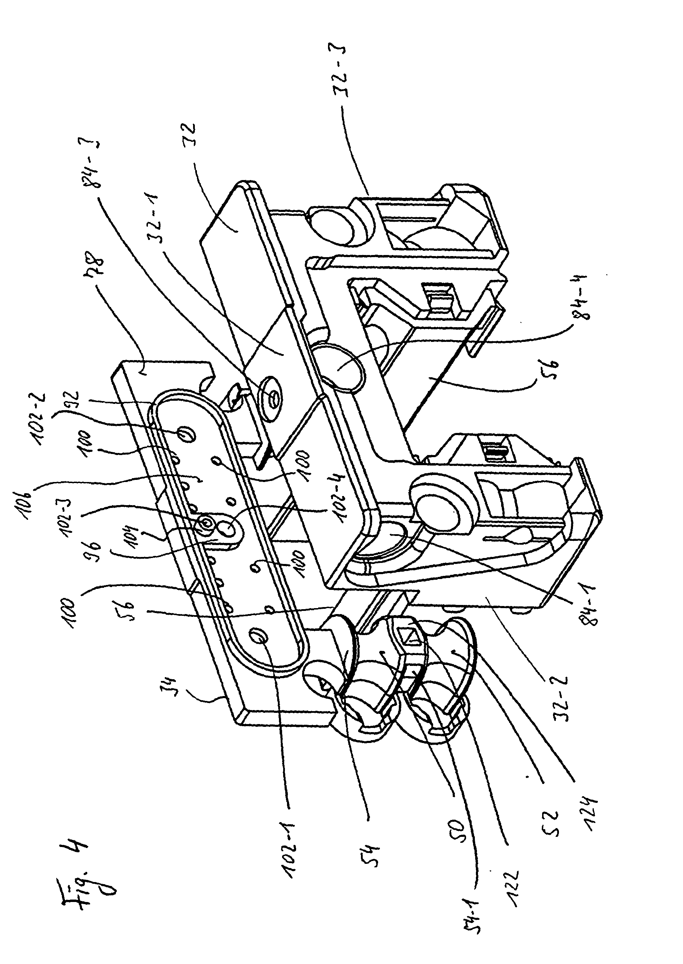

Es wird nun auf die Fig. 3 und 4 verwiesen. Das Kopfstück 32 setzt sich entsprechend der U-förmigen Ausbildung des Führungswagens aus einem Kopfstücksteg 32-1 und aus Kopfstückschenkeln 32-2, 32-3 zusammen. In den Kopfstückschenkeln 32-2, 32-3 sind bogenäußere, im wesentlichen halbtorische Umlenkflächen 44 und 46 ausgebildet, welche durch eine halbzylindrische Trennfläche 48 voneinander getrennt sind. Die bogenäußeren Umlenkflächen 44, 46 sind Teil der bereits angesprochenen Umlenkführungen in den Kopfbaugruppen des Führungswagens.

Sie werden ergänzt durch bogeninnere Umlenkflächen 50 und 52, welche an einem Umlenkkörper 54 ausgebildet sind, der einstückig an der Zwischenplatte 34 angeformt ist. Im montierten Zustand liegt die bogeninnere Umlenkfläche 50 der bogenäußeren Umlenkfläche 44 gegenüber. Zugleich liegt die bogeninnere Umlenkfläche 52 der bogenäußeren Umlenkfläche 46 gegenüber, so daß die Umlenkflächenpaare 50, 44 und 52, 46 je einen im wesentlichen halbtorischen Umlenkkanal für die Kugeln der jeweiligen Kugelschleife bilden.

In Achsrichtung der Linearführungseinrichtung schließt sich an jeden der Kopfstückschenkel 32-2, 32-3 eine Halteleiste 56 an, welche dazu bestimmt ist, die Kugeln der beiden dem jeweiligen Schenkelbereich 28 des Führungswagens 14 zugeordneten Kugelschleifen in Eingriff mit tragenden Laufbahnen des Wagenhauptkörpers 16 zu halten. In Fig. 3 erkennt man Kugeln 58 zweier Kugelschleifen S1, S2, die an Laufflächen 60 der Halteleiste 56 abrollen. Die Laufflächen 60 gehen im Bereich des Kopfstücks 32 glatt in die bogenäußeren Umlenkflächen 44, 46 über.

Die Zwischenplatte 34 ist von Kugelrücklauflöchern 62, 64 durchsetzt, welche den rücklaufenden Kugeln der jeweiligen Kugelschleife den Zugang zu den Rücklaufbohrungen des Wagenhauptkörpers 16 öffnen. Ausgehend von einer dem Wagenhauptkörper 16 zugekehrten Anlagefläche 66 sind an der Zwischenplatte 34 Rohrstutzen 68, 70 angebracht, welche einstückig mit der Zwischenplatte 34 hergestellt sind und konzentrisch zu dem zugehörigen Kugelrücklaufloch 62, 64 liegen. Bei der Montage des Kopfstücks 32 und der Zwischenplatte 34 an dem Wagenhauptkörper 16 werden die Rohrstutzen 68, 70 als Positionierhilfe in erweiterte Endabschnitte der Kugelrücklaufbohrungen des Wagenhauptkörpers 16 eingesteckt.

Zur Befestigung mittels der in Fig. 2 gezeigten Befestigungsbolzen 42 sind an dem Kopfstück 32 und der Zwischenplatte 34 miteinander fluchtende Bolzenaufnahmelöcher 72 und 74 vorgesehen.

Auf seiner dem Wagenhauptkörper 16 zugekehrten Axialseite besitzt das Kopfstück 32 eine Anlagefläche 76, welche zur Anlage an einer Anlagefläche 78 der Zwischenplatte 34 bestimmt ist. Die Zwischenplatte 34 kommt bei der Montage ihrerseits mit ihrer Anlagefläche 66 an der zugehörigen axialen Stirnfläche des Wagenhauptkörpers 16 zu liegen. Im Bereich des Kopfstückstegs 32-1 hat die Zwischenplatte 34 im wesentlichen den gleichen Umriß wie das Kopfstück 32 und der Wagenhauptkörper 16. Im Bereich der Kopfstückschenkel 32-2, 32-3 wird der Umriß der Zwischenplatte 34 durch die angeformten, insbesondere angespritzten Umlenkkörper 54 sowie die Rohrstutzen 68, 70 bestimmt. Im montierten Zustand von Kopfstück 32 und Zwischenplatte 34 wird die Anlagefläche 66 seitlich neben den Rohrstutzen 68, 70 durch eine koplanare Anlagefläche 80 ergänzt, die an einem Stufenvorsprung 82 des jeweiligen Kopfstückschenkels 32-2 bzw. 32-3 ausgebildet ist.

Das Kopfstück 32 weist Schmierstoffeingabeanschlüsse bei 84-1, 84-2, 84-3 und 84-4 auf. Jeder dieser Schmierstoffeingabeanschlüsse ist mit einer zugehörigen Öffnung auf der der Zwischenplatte 34 axial zugekehrten Seite des Kopfstücks 32 verbunden, nämlich der Schmierstoffeingabeanschluß 84-1 mit einer Öffnung 86-1, der Schmierstoffeingabeanschluß 84-2 mit einer Öffnung 86-2, der Schmierstoffeingabeanschluß 84-3 mit einer Öffnung 86-3 und der Schmierstoffeingabeanschluß 84-4 mit einer Öffnung 86-4. Die Öffnungen 86-1 und 86-2 münden in eine Fläche 88, welche in der gleichen Ebene wie die Anlagefläche 76 liegt und von einer umlaufenden Dichtungsnut 90 umschlossen ist. Auf ihrer dem Kopfstück 32 axial zugekehrten Seite weist die Zwischenplatte 34 einen Dichtungssteg 92 auf, welcher bei Montage der Kopfbaugruppe schmiermitteldicht in die Nut 90 des Kopfstücks 32 eingreift. Die Öffnungen 86-3 und 86-4 münden in eine gegenüber der Fläche 88 zurückversetzte Ausnehmung 94, der an der Zwischenplatte 34 ein konturgleicher Vorsprung 96 gegenüberliegt. Beidseits des Öffnungspaars 86-3, 86-4 ist in dem Kopfstücksteg 32-1 je eine Vorratskammer 98 zur Bevorratung von Schmierstoff ausgebildet. Den Vorratskammern 98 liegen an der Zwischenplatte 34 jeweils mehrere querschnittskleinere Durchtrittsöffnungen 100 gegenüber. Des weiteren sind in der Zwischenplatte 34 querschnittsgrößere Durchtrittsöffnungen 102-1, 102-2 und 102-4 ausgebildet, welche den Öffnungen 86-1, 86-2 und 86-4 gegenüberliegen. Schließlich ist durch einen an dem Vorsprung 96 ausgebildeten Ringansatz 104 eine weitere Durchtrittsöffnung 102-3 begrenzt, welche der Öffnung 86-3 des Kopfstücks 32 gegenüberliegt.

Die Schmierstoffeingabeanschlüsse 84-3 und 84-4 können auch mit einer einzigen gemeinsamen Öffnung verbunden sein, etwa der Öffnung 86-4. An der Zwischenplatte 34 wird in Zuordnung zu dieser einzigen Öffnung dann ebenfalls nur eine einzige Durchtrittsöffnung vorgesehen sein, etwa die Durchtrittsöffnung 102-4.

Auf der dem Kopfstück 32 axial zugewandten Seite liegen die querschnittskleineren Durchtrittsöffnungen 100 ebenso wie die querschnittsgrößeren Durchtrittsöffnungen 102-1 und 102-2 in einer Fläche 106, welche in der gleichen Ebene wie die Anlagefläche 78 liegt und von dieser durch den Dichtungssteg 92 getrennt ist. Die querschnittsgrößere Durchtrittsöffnung 102-4 mündet in dem Vorsprung 96. Bei der Montage der Kopfbaugruppe gelangen die Fläche 88 des Kopfstücks 32 und die Fläche 106 der Zwischenplatte 34 in satte Anlage aneinander, so daß in diesem Bereich kein Zwischenraum zwischen dem Kopfstück 32 und der Zwischenplatte 34 besteht. Die Öffnungen 86-1, 86-2 und 86-4 des Kopfstücks 32 gehen dann unmittelbar in die zugehörige Durchtrittsöffnung 102-1, 102-2 bzw. 102-4 der Zwischenplatte 34 über. Ebenso steht die Durchtrittsöffnung 102-3 dann in unmittelbarer Verbindung mit der Öffnung 86-3, weil der Ringansatz 104 in die Öffnung 86-3 eingreift.

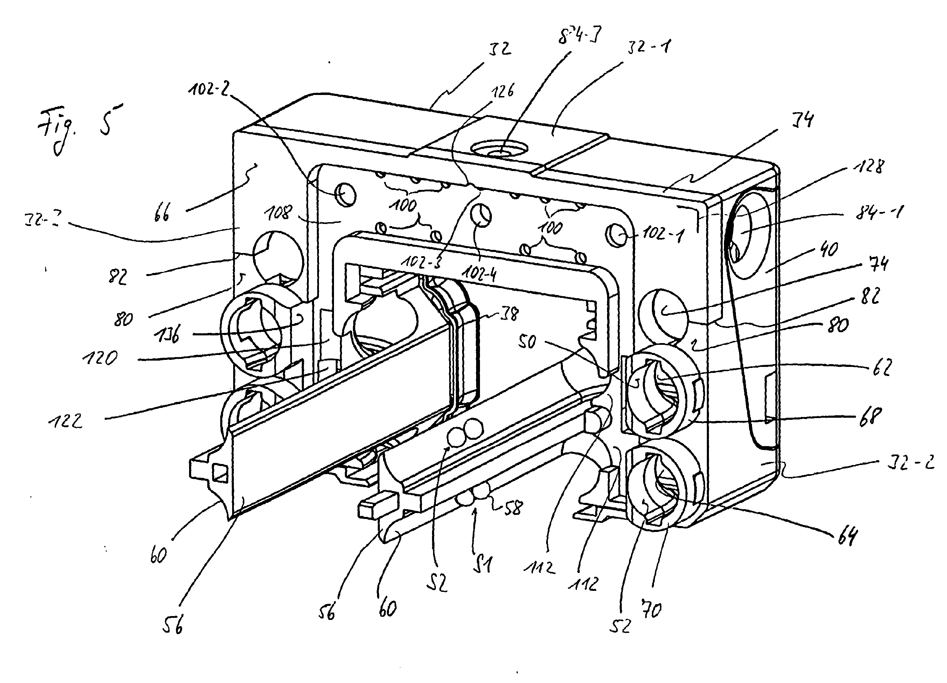

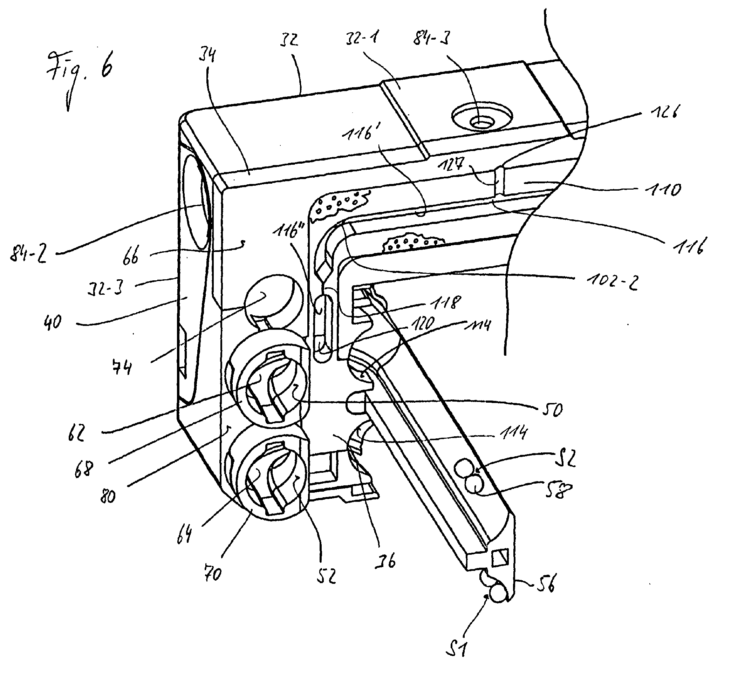

Die Schmierstoffeingabebohrungen 84-1 bis 84-4, die daran bis zu den Öffnungen 86-1 bis 86-4 anschließenden Kanäle in dem Kopfstück 32, die Durchtrittsöffnungen 102-1 bis 102-4, die Vorratskammern 98 sowie die die Verbindung zu diesen herstellenden Durchtrittsöffnungen 100 bilden einen Schmierstoffversorgungsraum, von dem aus die Kugelschleifen S1 und S2 wahlweise mit hochviskosem Schmierfett oder mit niedrigviskosem, dünnflüssigem Schmieröl versorgt werden können. Der Schmierstoff, egal ob Schmierfett oder Schmieröl, wird wahlweise durch einen der Schmierstoffeingabeanschlüsse 84-1 bis 84-4 in den Schmierstoffversorgungsraum eingeführt. Von dort gehen parallel eine Schmierölzuführleitung und eine Schmierfettzuführleitung ab, durch die Schmieröl bzw. Schmierfett zu den Kugelschleifen S1, S2 transportiert wird. Zur Erläuterung der Schmierölzuführleitung wird nun auf die Fig. 5 und 6 verwiesen.

In die dem Wagenhauptkörper zugekehrte Anlagefläche 66 der Zwischenplatte 34 ist eine im wesentlichen U-förmig um die Führungsschiene herum verlaufende Ausnehmung 108 reliefartig eingelassen, die zum Wagenhauptkörper hin offen ist. Diese reliefartige Ausnehmung 108 wird beim Spritzen der vorzugsweise aus einem harten Kunststoff bestehenden Zwischenplatte 34 gebildet. In die reliefartige Ausnehmung 108 ist ein die Schmiereinsatzplatte 36 bildender Saugkörper 110 (siehe Fig. 6) gewünschtenfalls unter leichter Vorspannung eingelegt, der aus einem schmierölaufsaugenden und dieses durch Kapillarwirkung fördernden Material besteht. Denkbar ist hierzu ein Textilmaterial, etwa Filz. Bevorzugt ist das Material des Saugkörpers 110 jedoch ein offenzelliger Schaumstoff, insbesondere ein Polymer-Kunststoff, in dessen Porensystem Schmieröl allein durch Kapillarwirkung ohne äußere Druckeinwirkung gleichmäßig über den gesamten Saugkörper 110 verteilt wird. Der U-förmige Saugkörper 110 dient zur gleichzeitigen Schmierölversorgung sämtlicher Kugelschleifen des Führungswagens und erstreckt sich hierzu über den Stegbereich der Zwischenplatte 34 bis in beide Schenkelbereiche hinein. An den Kugelschleifen S1 und S2 ist die Ausnehmung 108 durch Durchbrüche 112 (siehe Fig. 5) mit dem Umlaufraum der Kugelschleifen S1, S2, speziell dem für die tragenden Kugelreihen der Kugelschleifen S1, S2 vorgesehenen Raum, verbunden. In diese Durchbrüche 112 reicht der Saugkörper 110 hinein und fügt sich mit gerundeten Kontaktflächen 114 bündig in das im Führungswagen für die Kugelschleifen S1, S2 bereitgestellte Laufbahnsystem ein. Bei ihrem Umlauf durch den Umlaufraum bewegen sich die Kugeln der Kugelschleifen S1, S2 an den Kontaktflächen 114 vorbei und werden dabei mit Schmieröl benetzt, das sie von den Kontaktflächen 114 abschlecken. Der Benetzungskontakt des Saugkörpers 110 mit den Kugeln der Kugelschleifen S1, S2 findet im dargestellten Ausführungsbeispiel im Übergangsbereich zwischen den tragenden Kugelreihen der Kugelschleifen S1, S2 und den jeweils anschließenden Umlenkbogen-Kugelreihen statt. Es versteht sich, daß der Saugkörper 110 auch an anderen Stellen längs des Umlaufwegs der Kugeln der Kugelschleifen S1, S2 in den Umlaufraum reichen kann, etwa am Übergang zwischen den rücklaufenden Kugelreihen der Kugelschleifen S1, S2 und den jeweils anschließenden Umlenkbogen-Kugelreihen.

Die angesprochene Schmierfettzuführleitung ist in der Weise gebildet, daß in dem Saugkörper 110 ein Schlitz 116 (siehe Fig. 6) vorgesehen ist, welcher den Saugkörper 110 in Achsrichtung durchsetzt und über den Stegbereich des Saugkörpers 110 hinweg bis in beide Schenkelbereiche des Saugkörpers 110 reicht. Der Schlitz 116 ist so in den Saugkörper 110 eingebracht, daß die querschnittsgrößeren Durchtrittsöffnungen 102-1, 102-2 und 102-4 der Zwischenplatte 34 im Bereich des Schlitzes 116 liegen und nicht durch den Saugkörper 110 verdeckt sind. In Fig. 6 erkennt man einen Teil der Durchtrittsbohrung 102-2. Die querschnittskleineren Durchtrittsbohrungen 100 werden dagegen vollständig durch den Saugkörper 110 verdeckt. Bei 118 ist der Schlitz 116 so verengt, daß ein Überdruckventil gebildet ist, welches im drucklosen Zustand den Durchgang zwischen einem Schlitzbereich 116' stromaufwärts des Überdruckventils 118 und einem Schlitzbereich 116" stromabwärts des Überdruckventils 118 sperrt und bei Anlegen eines Druckgefälles zwischen dem stromaufwärtigen und dem stromabwärtigen Schlitzbereich diesen Durchgang öffnet. Das Material des Saugkörpers 110 ist hierzu elastisch kompressibel. Es versteht sich, daß das Überdruckventil 118 nicht nur durch eine vom Material des Saugkörpers 110 begrenzte Engstelle des Schlitzes 116 gebildet sein kann, sondern beispielsweise auch von einer einstückig an die Zwischenplatte 34 angeformten Ventillamelle, die in den Schlitz 116 hineinragt.

Es wird nun zunächst der Fall betrachtet, daß durch einen der Schmierstoffeingabeanschlüsse 84-1 bis 84-4 hochviskoses Schmierfett mittels einer Fettpresse eingepreßt wird. Wird hierzu der Schmierstoffeingabeanschluß 84-1 gewählt, so gelangt das Schmierfett (nur) zu der Öffnung 86-1 und tritt durch die Durchtrittsöffnung 102-1 in den in dem Saugkörper 110 ausgesparten Schlitz 116 ein. Hier gelangt das Schmierfett bis zu den Überdruckventilen 118 und steht annähernd mit dem vollen Druck an, der durch die Fettpresse bereitgestellt wird. Liegt das Schmierfett nun mit diesem Druck an dem Überdruckventil 118 an, so öffnet dieses, und das Schmierfett kann in den Schlitzbereich 116" stromabwärts des Überdruckventils 118 weiterfließen. Am Ende des Schlitzbereichs 116" weicht das Schmierfett in eine in der reliefartigen Ausnehmung 108 gebildete Rinne 120 (siehe insbesondere Fig. 3 und 5) aus, in der das Schmierfett zu einem Durchstichkanal 122 (siehe Fig. 3 und 4) transportiert wird, der in dem Umlenkkörper 54 von der kopfstückfernen Seite zur kopfstücknahen Seite durchgeht. In den Saugkörper 110 hinein kann das Schmierfett nicht eindringen, da das Material des Saugkörpers 110 eine für Schmierfett undurchdringliche Barriere darstellt. Zwischen die Zwischenplatte und den Wagenhauptkörper kann das Schmierfett ebenfalls nicht entweichen, da die Zwischenplatte 34 dicht an dem Wagenhauptkörper anliegt. Daher bleibt dem Schmierfett nur der Weg durch die Rinne 120 in den von dem Saugkörper 110 überdeckten Durchstichkanal 122. Der letztere ist auf die halbzylindrische Fläche 48 zwischen den beiden bogenäußeren Umlenkflächen 44, 46 hin gerichtet und mündet in einer zwischen den bogeninneren Umlenkflächen 50, 52 des Umlenkkörpers 54 liegenden Abflachung 124 (siehe Fig. 4). Diese Abflachung 124 begrenzt mit der ihr gegenüberliegenden halbzylindrischen Fläche 48 zwei Fettausflußöffnungen, von denen die eine zur unteren Kugelschleife S1 und die andere zur oberen Kugelschleife S2 hin führt. Weil der in Fig. 4 mit 54-1 bezeichnete Mittelteil des Umlenkkörpers 54 im wesentlichen dicht an der halbzylindrischen Fläche 48 des Kopfstücks 32 anliegt und nur im Bereich seiner Abflachung 124 einen Zwischenraum zu der halbzylindrischen Fläche 48 freiläßt, kann das Schmierfett nur nach oben und nach unten zu den Kugelschleifen S1, S2 abfließen.

Stromabwärts der ventilartigen Schlitzverengung 118 findet praktisch keine Drosselung des Schmierfetts mehr statt. Das Schmierfett fließt also ohne wesentlichen Widerstand durch den Schlitzbereich 116" stromabwärts des Ventils 118, die Rinne 120, den Durchstichkanal 122 und die Ausflußöffnungen an der Abflachung 124 zu den Kugelschleifen S1, S2. Dennoch ist ein Nachfließen des in der Rinne 120, in dem Durchstichkanal 122 und an den Ausflußöffnungen befindlichen Schmierstoffs zu den Kugelschleifen S1, S2 nicht zu erwarten, weil nämlich in die Rinne 120 nur hochviskoses Schmierfett gelangt, nicht aber niedrigviskoses Schmieröl, sofern dieses zur Anwendung gelangt. Obwohl die untere Kugelschleife S1 tiefer liegt als die obere Kugelschleife S2 (wenn man von der in den Zeichnungen dargestellten Orientierung des Führungswagens als Betriebslage ausgeht) und obwohl die vergleichsweise großzügig bemessenen Ausflußöffnungen an der Abflachung 124 in vertikaler Flucht übereinander liegen, besteht keine wesentliche Gefahr, daß Schmierfett von der oberen Kugelschleife S2 zu der unteren Kugelschleife S1 abfließt und so eine Fettverarmung in der oberen Kugelschleife S2 eintritt. Dies liegt an der hohen Viskosität des Schmierfetts, die schwerkraftbedingte Umverteilungen des Schmierfetts weitestgehend ausschließt.

Analoge Vorgänge ergeben sich, wenn Schmierfett durch die Schmierstoffeingabeanschlüsse 84-2 und 84-4 eingepreßt wird. Bei einer Fetteingabe durch den Schmierstoffeingabeanschluß 84-3 liegt der Fall nur insofern etwas anders, als die dem Schmierstoffeingabeanschluß 84-3 zugeordnete Durchtrittsöffnung 102-3 in der Zwischenplatte 34 durch den Saugkörper 110 verdeckt ist. Der Zugang zu dem Schlitzbereich 116' kann für das Fett dann beispielsweise durch eine Rille 126 am oberen Rand der Ausnehmung 108 und durch eine an die Rille 126 anschliessende und bis zu dem Schlitzbereich 116' durchgehende Aussparung 127 in dem Saugkörper 110 möglich sein. Statt auf der dem Wagenhauptkörper zugekehrten Seite des Saugkörpers 110 kann eine solche Aussparung 127 auch auf der dem Boden der Ausnehmung 108 zugewandten Seite des Saugkörpers 110 vorgesehen sein. Ebenso kann in den Boden der Ausnehmung 108 selbst eine solche Aussparung 127 eingearbeitet sein. In den beiden letzten Fällen kann die Rille 126 entfallen.

Es wird nun der Fall einer Schmierung mit Schmieröl betrachtet. Wenn Schmieröl durch einen der Anschlüsse 84-1 bis 84-4 zugeführt wird, etwa durch ein zentrales Schmierölversorgungssystem der die Linearführungseinrichtung umfassenden übergeordneten Maschine, welches in periodischen Zeitabständen eine Schmieröldosage vornimmt, so gelangt das Schmieröl wiederum durch die Öffnungen 86-1 bis 86-4 und die Durchtrittsöffnungen 102-1 bis 102-4 in die reliefartige Ausnehmung 108. Dort wird es von dem Saugkörper 110 aufgesaugt. Und zwar wird durch die Durchtrittsöffnung 102-3 einströmendes Schmieröl sofort von dem Saugkörper 110 aufgesaugt, da letzterer diese Durchtrittsöffnung überdeckt, während durch die Durchtrittsöffnungen 102-1, 102-2 und 102-4 einströmendes Schmieröl zunächst in den Schlitz 116 gelangt. In dem Schlitz 116 verteilt es sich und wird nach und nach von dem Saugkörper 110 aufgesaugt. In dem Saugkörper 110 wird das Schmieröl dann zu den gerundeten Kontaktflächen 114 gefördert. Die Schmierung der Kugelschleifen S1, S2 mit Schmieröl erfolgt dadurch, daß der Saugkörper 110 ständig mit Schmieröl gesättigt ist und die Kugeln Schmieröl von den Kontaktflächen 114 abschlecken. Damit ist eine kontinuierliche und ausreichende Schmierung sämtlicher Kugeln gewährleistet, ohne daß freies Schmieröl in größerer Menge in dem Umlaufraum der Kugelschleifen S1, S2 bevorratet wird.

An sich würde es zur Schmieröleinfüllung in den Führungswagen genügen, Schmieröl im wesentlichen drucklos durch einen der Schmierstoffeingabeanschlüsse 84-1 bis 84-4 einlaufen zu lassen, und zwar in solcher Menge, bis der Saugkörper 110 vollständig getränkt ist und gewünschtenfalls auch der stromaufwärts der Ventile 118 liegende Schlitzbereich 116' mit Schmieröl gefüllt ist. Dieses freie Schmieröl steht dann an den öldicht sperrenden Überdruckventilen 118 an, kann diese jedoch nicht öffnen, so daß durch die Rinne 120 und den Durchstichkanal 122 kein freies Schmieröl zu den Kugelschleifen S1, S2 ausfließen kann. Um auch die Vorratskammern 98 mit Schmieröl zu füllen, muß jedoch das Schmieröl unter einem gewissen Druck in den Führungswagen eingefüllt werden, damit nach Sättigung des Saugkörpers 110 von diesem Schmieröl "ausgeschwitzt" wird und durch die querschnittskleineren Durchtrittsöffnungen 100 in die Vorratskammern 98 gelangt. Dabei kann es unter Umständen zu einem kurzzeitigen Öffnen der Überdruckventile 118 kommen mit der möglichen Folge, daß freies Schmieröl durch die Rinne 120 und den Durchstichkanal 122 zu den Ausflußöffnungen an der Abflachung 124 abfließt. Man wird jedoch versuchen, den Öffnungsdruck der Überdruckventile 118 so groß einzustellen, daß bei üblichen Öleinfülldrücken kein Öffnen der Überdruckventile 118 auftritt. Dann besteht lediglich noch die Möglichkeit, daß infolge des Öleinfülldrucks Schmieröl an den Kontaktflächen 114 ausgeschwitzt wird. Allerdings findet in dem Saugkörper 110 auf der relativ langen Strecke bis zu den Kontaktflächen 114 ein so großer Druckabfall statt, daß ein derartiges Ausschwitzen von Schmieröl an den Kontaktflächen 114 allenfalls in einem tolerierbaren Umfang erfolgt. Selbst bei einer Schmierölnachfüllung gelangt dann kein Schmieröl in größerer Menge in den Umlaufraum der Kugelschleifen S1, S2.

Sofern Schmieröl ungewollt durch das Überdruckventil 118, die Rinne 120 und den Durchstichkanal 122 in den Umlaufraum für die Kugelschleifen S1, S2 austritt, wird es schwerkraftbedingt zu der jeweils tiefer gelegenen Kugelschleife abfließen. Eine schädliche Verarmung an Schmieröl in der jeweils höher gelegenen Kugelschleife ist dabei jedoch nicht zu befürchten, weil durch das ständige Abschlecken von Schmieröl an den Kontaktflächen 114 eine ständige und ausreichende Schmierung der jeweils höher gelegenen Kugelschleife gewährleistet ist, und zwar auch dann, wenn in dieser höher gelegenen Kugelschleife - dem normalen Betriebszustand entsprechend - kein freies Schmieröl vorhanden ist.

Das freie Schmieröl in den Vorratskammern 98 und in dem Schlitz 116 ermöglicht eine fortwährende Nachversorgung des Saugkörpers 110, so daß dieser nicht austrocknet. Aufgrund seiner Saugwirkung saugt der Saugkörper 110 stets solche Mengen an Schmieröl aus den Vorratskammern 98 und dem Schlitz 116 ab, daß seine vollständige Tränkung erhalten bleibt. Vorteilhaft ist, daß bei Fettschmierung die Vorratskammern 98 nicht mit Schmierfett gefüllt werden, da die den Zugang zu den Vorratskammern 98 ermöglichenden querschnittskleineren Durchtrittsöffnungen 100 durch den Saugkörper 110 versperrt sind. Die Ansammlung einer größeren Menge an "totem", unbenutztem Schmierfett in dem Führungswagen wird so vermieden, was sich günstig auf die insgesamt in den Führungswagen einzugebende Fettfüllmenge auswirkt.

Zur Befüllung der Vorratskammern 98 ist es auch denkbar, die Durchtrittsöffnungen 100 in der Zwischenplatte 34 in axialer Flucht mit dem Schlitzbereich 116' anzuordnen, so daß das durch die Durchtrittsöffnungen 102-1, 102-2 und 102-4 in den Schlitzbereich 116' eintretende Schmieröl direkt in die Vorratskammern 98 strömen kann. Dies stellt eine Alternative zu der zuvor angesprochenen Möglichkeit dar, die Vorratskammern 98 durch Ausschwitzen von Schmieröl aus dem Saugkörper 110 zu füllen. Allerdings müßte bei dieser Alternative in Kauf genommen werden, daß auch Schmierfett, sofern eine Fettschmierung vorgenommen wird, in die Vorratskammern 98 gelangen kann. Zwar kann durch eine entsprechend kleine Dimensionierung der Durchtrittsöffnungen 100 der Fettdurchfluß durch die Durchtrittsöffnungen 100 in die Vorratskammern 98 klein gehalten werden. Betriebsbedingt kann sich die Linearführungseinrichtung jedoch erwärmen mit der Folge, daß es letztlich doch zu einem an sich ungewollten Fettausfluß in die Vorratskammern 98 kommen kann.

Die Abdichtung zwischen der Anlagefläche 76 des Kopfstücks 32 und der Anlagefläche 78 der Zwischenplatte 34 sowie die Abdichtung zwischen der Anlagefläche 66 der Zwischenplatte 34 und der ihr gegenüberliegenden Stirnfläche des Wagenhauptkörpers 16 wird durch eine geeignete Materialwahl und/oder durch eine geeignete Anordnung von Dichtelementen an der Zwischenplatte 34 und/oder an dem Kopfstück 32 bewirkt. Ein solches Dichtelement ist der in die Nut 90 des Kopfstücks 32 eingreifende Dichtungssteg 92 an der Zwischenplatte 34. Des weiteren können an der Zwischenplatte 34 Dichtlippen angeordnet sein, wie beispielsweise in Fig. 5 bei 128 angedeutet. Der Saugkörper 110 übernimmt für Schmieröl keinerlei Abdichtfunktion und kann auch keine übernehmen, weil er ja, selbst wenn er beim Einbau unter Vorspannung gesetzt wurde, um ihn zur vollständigen Ausfüllung der reliefartigen Ausnehmung 108 zu veranlassen, auf seinem ganzen Volumen mit Schmieröl gesättigt ist.

Über den Schlitz 116 und die Durchtrittsöffnungen 102-1, 102-2 und 102-4 besteht zumindest zwischen den Schmierstoffeingabeanschlüssen 84-1, 84-2 und 84-4 eine Verbindung. Will man an einem der Schmierstoffeingabeanschlüsse Schmierstoff einfüllen, ist es deshalb nötig, die nicht benützten Anschlüsse mit einem Blindstopfen zu verschließen, während der benutzte Anschluß mit einem Schmiernippel versehen wird. Um solche Blindstopfen zu vermeiden, ist es denkbar, den Anschlüssen 84-1 bis 84-4 einzeln oder gruppenweise (etwa der Anschlußgruppe 84-3, 84-4) je ein als Rückschlagventil wirkendes Ventilelement zuzuordnen, durch das der jeweilige Anschluß oder die jeweilige Anschlußgruppe von den übrigen Anschlüssen getrennt wird. Diese Ventilelemente können beispielsweise als Ventilklappen ausgebildet sein, welche an dem Kopfstück 32 oder der Zwischenplatte 34 angebracht, insbesondere einstückig angeformt, sind und die Öffnungen 86-1 bis 86-4 oder die Durchtrittsöffnungen 102-1 bis 102-4 verschließen. In Fig. 3 ist gestrichelt eine die Öffnung 86-1 verschließende Ventilklappe 128 eingezeichnet, welche bei Anlegen eines Schmierstoffdrucks an dem Anschluß 84-1 auslenkt und die Öffnung 86-1 freigibt. Es versteht sich, daß in diesem Fall zwischen der Fläche 88 des Kopfstücks 32 und der gegenüberliegenden Fläche 106 der Zwischenplatte 34 ein Zwischenraum vorhanden sein muß, der die Auslenkung der Ventilklappe 128 ermöglicht. Bei Schmierstoffeingabe an dem Anschluß 84-1 erübrigen sich dann Blindstopfen an den übrigen Anschlüssen 84-2 bis 84-4, da die diesen zugeordneten Ventilklappen (die in Fig. 3 nicht eingezeichnet sind) die Öffnungen 86-2 bis 86-4 geschlossen halten und den Rückfluß von Schmierstoff zu den Anschlüssen 84-2 bis 84-4 verhindern.

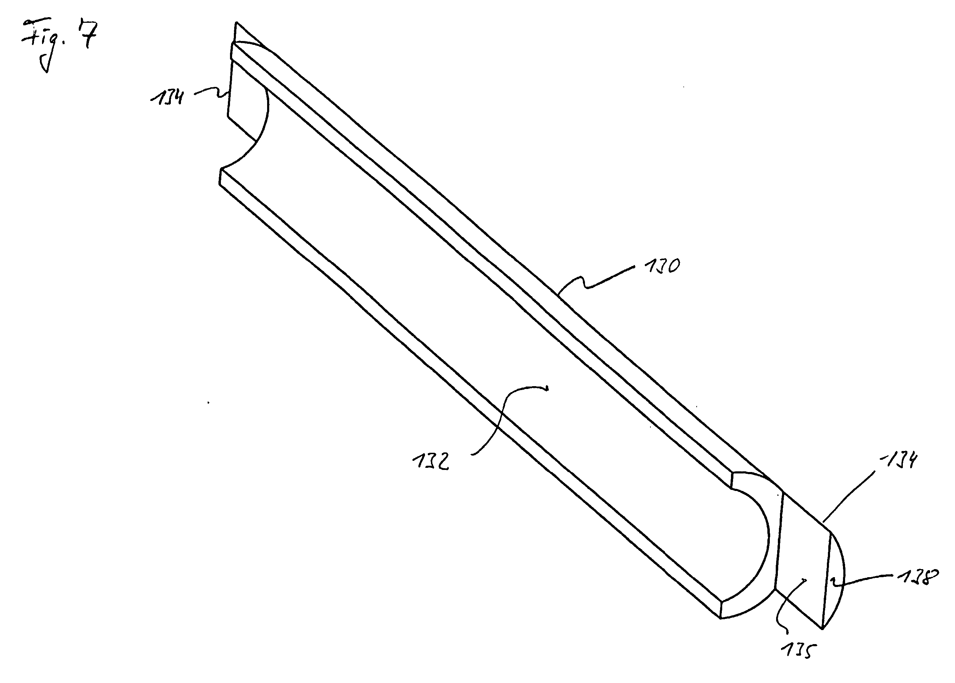

Fig. 7 zeigt eine Schmierhalbschale 130, die jeweils in die Kugelrücklaufkanäle des Wagenhauptkörpers 16 eingelegt wird und eine Fortsetzung der durch den Saugkörper 110 gebildeten Schmierölzuführkapillarleitung in den Bereich der rücklaufenden Kugelreihen der Kugelschleifen S1, S2 bildet. Mit ihrer konkaven Innenseite 132 bildet die Schmierhalbschale 130 eine Lauffläche für die rücklaufenden Kugeln der jeweiligen Kugelschleife S1, S2. Die Schmierhalbschale 130 besteht aus einem Schmieröl aufsaugenden und durch Kapillarwirkung fördernden Material. In Frage kommt hier wiederum ein offenzelliger Schaumstoff. Wegen seiner hohen Verschleißfestigkeit wird jedoch ein Sintermetall, insbesondere Sinterbronze, bevorzugt. An ihren gegenüberliegenden Längsenden weist die Schmierhalbschale 130 jeweils eine abstehende kreissegmentförmige Zunge 134 auf, die mit einer Positionierfläche 135 an eine Abplattung 136 (Fig. 5) eines der Positionierrringe 68, 70 angelegt wird. Mit einer endseitigen Stoßfläche 138 stößt die Schmierhalbschale dabei an den in die Zwischenplatte 34 eingelegten Saugkörper 110 an, so daß die Schmierhalbschale 130 Schmieröl aus dem Saugkörper 110 aufsaugen kann. Es hat sich gezeigt, daß bereits dieser kleinflächige Kontakt der kreissegmentförmigen Stoßfläche 138 der Schmierhalbschale 130 mit dem Saugkörper 110 genügt, um nach vergleichsweise kurzer Zeit eine vollständige Sättigung der Schmierhalbschale 130 mit Schmieröl zu erreichen.

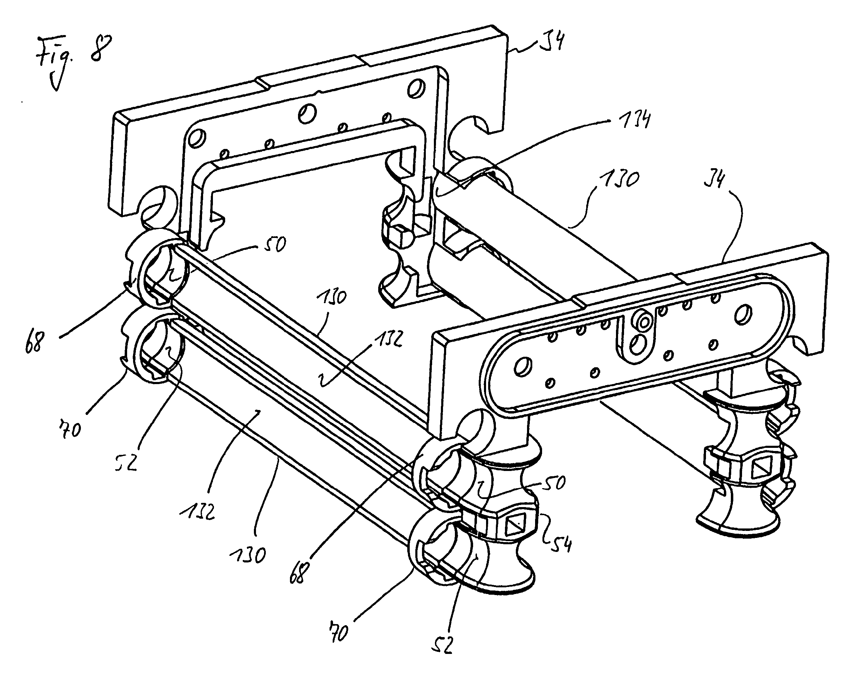

In Fig. 8 erkennt man, daß die an die Positionierringe 68, 70 anstoßenden Schmierhalbschalen 130 mit ihrer Kugellauffläche 132 einen glatten, stufenlosen Übergang zur jeweiligen bogeninneren Umlenkfläche 50, 52 bilden.

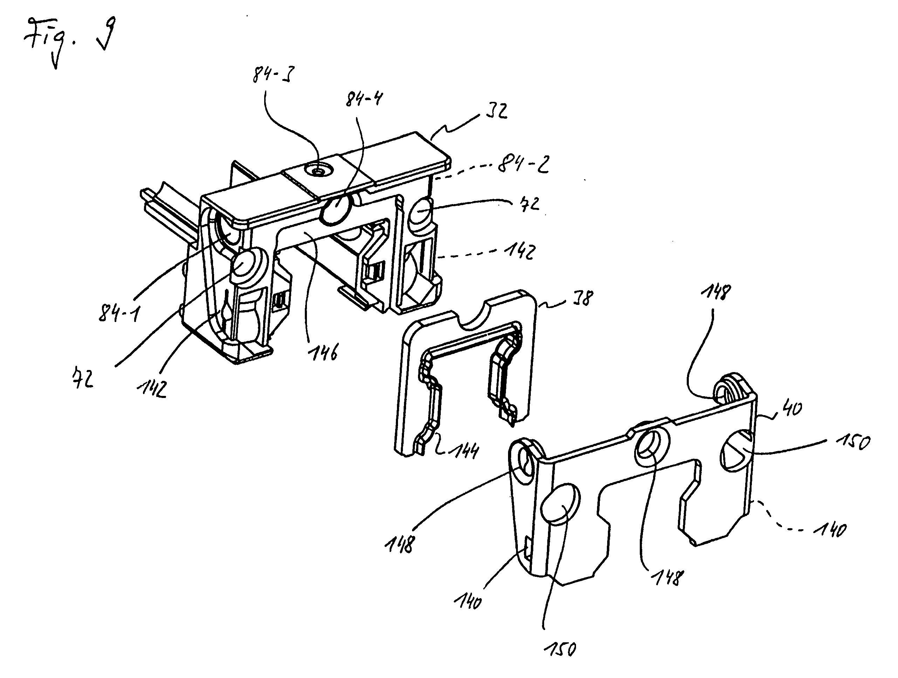

In Fig. 9 erkennt man, daß die bevorzugt aus Blech gefertigte Armierungsplatte 40 mit Rastaussparungen 140 an Rastvorsprüngen 142 des Kopfstücks 32 einschnappbar ist. Die dem Umriß der Führungsschiene konturangepaßte und mit einer Doppeldichtlippenanordnung 144 an der Führungsschiene anliegende Dichtungsplatte 38 wird dabei zwischen dem Kopfstück 32 und der Armierungsplatte 40 in einer Ausnehmung 146 auf der dem Wagenhauptkörper abgewandten Seite des Kopfstücks 32 aufgenommen. An der Armierungsplatte 40 sind Innengewindebuchsen 148 einstückig ausgebildet, die bei Montage der Armierungsplatte 40 an dem Kopfstück 32 in Deckung mit die Schmierstoffeingabeanschlüsse 84-1, 84-2 und 84-4 bildenden Anschlußbohrungen in dem Kopfstück 32 gelangen. In die Innengewindebuchsen 148 kann ein Schmiernippel zum Anschluß eines Schmierstofffüllgeräts eingeschraubt werden. Es können auch Blindstopfen eingesetzt werden, um nicht benutzte Schmierstoffeingabeanschlüsse zu verschließen. Beschädigungen der Armierungsplatte 40 infolge des Einschraubens eines Schmiernippels sind wegen des Metallwerkstoffs der Armierungsplatte 40 nicht zu befürchten, im Gegensatz zu dem üblicherweise aus Kunststoff gespritzten Kopfstück 32, bei dem ein zu starkes Einschrauben eines Schmiernippels leicht zu einer Beschädigung des Kunststoffmaterials führen könnte.

Dem Schmierstoffeingabeanschluß 84-3 ist im vorliegenden Ausführungsbeispiel keine Innengewindebuchse an der Armierungsplatte 40 zugeordnet. Es versteht sich jedoch, daß die Armierungsplatte 40 auch über den Schmierstoffeingabeanschluß 84-3 reichen kann. Löcher 150 in der Armierungsplatte 40 dienen zum Durchtritt der in Fig. 2 gezeigten Befestigungsschrauben 42.

Es werden nun nochmals die Abläufe bei der Befüllung des Führungswagens mit Schmierstoff zusammengefaßt. Es sei davon ausgegangen, daß der Führungswagen in einem montagefertigen und betriebsbereiten Zustand vorliegt, wobei er auch schon auf die Führungsschiene aufgesetzt sein kann. Zunächst wird der Fall betrachtet, daß eine Ölschmierung beabsichtigt ist. Hierzu wird eine Ölfüll-Leitung an einen der Schmierstoffeingabeanschlüsse 84-1 bis 84-4 angeschlossen. Dies kann in der Weise geschehen, daß in den betreffenden Eingabeanschluß ein Schmiernippel mit einem Rückschlagventil eingeschraubt und die Ölfüll-Leitung an diesen Schmiernippel angeschlossen wird. Es kann aber auch die Ölfüll-Leitung ein Schraubgewinde besitzen, mit dem sie in den betreffenden Eingabeanschluß eingeschraubt wird. Die Ölfüll-Leitung ist ihrerseits an eine Ölliefereinheit angeschlossen, welche ein gewünschtes Schmierölvolumen, das zur Ölbefüllung des Führungswagens insgesamt benötigt wird, liefern kann. Die Ölliefereinheit kann dieses Schmierölvolumen nach einem vorgegebenen Lieferprogramm liefern, etwa in der Weise, daß sie über eine vorbestimmte Zeitspanne hinweg einen konstanten Ölstrom unter einem gleichbleibenden Öldruck abgibt, aber auch in der Weise, daß der Ölstrom oder/und der Öldruck einen zeitveränderlichen Verlauf besitzen. Das Lieferprogramm der Ölliefereinheit kann gewünschtenfalls durch eine Bedienungsperson veränderbar sein und je nach Anwendungsfall festgelegt werden.

Von dem betreffenden Eingabeanschluß 84-1 bis 84-4 gelangt das Öl über die zugehörige Öffnung 86-1 bis 86-4 und die zugehörige Durchtrittsöffnung 102-1 bis 102-4 in die Ausnehmung 108 in der Zwischenplatte 34. Sofern das Schmieröl an einem der Eingabeanschlüsse 84-1, 84-2 und 84-4 eingefüllt wurde, tritt es in den in dem Saugkörper 110 ausgesparten Schlitzbereich 116' ein. Dort verteilt es sich und wird nach und nach von dem Saugkörper 110 aufgesaugt. Schmieröl, das an dem Eingabeanschluß 84-3 eingefüllt wird, trifft nach Durchgang durch die Durchtrittsöffnung 102-3 unmittelbar auf den Saugkörper 110. Sofern der Öldurchfluß an dem Eingabeanschluß 84-3 die Saugfähigkeit des Saugkörpers 110 übersteigt, kann es vorkommen, daß aus der Durchtrittsöffnung 102-3 austretendes Schmieröl, das nicht sofort von dem Saugkörper 110 aufgesaugt wird, das Material des Saugkörpers 110 etwas wegdrückt und sich einen Weg an dem Saugkörper 110 vorbei in den Schlitzbereich 116' bahnt.

Wenn bei der erstmaligen Befüllung des Führungswagens der Saugkörper 110 noch vollständig trocken ist oder nach einer vorbestimmten Betriebsdauer der Linearführungseinrichtung oder einem vorbestimmten zurückgelegten Laufweg des Führungswagens der Ölvorrat in dem Führungswagen zur Neige gegangen ist und der Saugkörper 110 nicht mehr mit Schmieröl gesättigt ist, saugt der Saugkörper 110 das in den Schlitzbereich 116' eingelaufene Schmieröl bzw. das durch die Durchtrittsöffnung 102-3 einströmende Schmieröl in seinem Stegbereich auf, so daß hier eine Ölanreicherung zu beobachten ist. Diese läßt in dem Saugkörper 110 einen Sättigungsgradienten zwischen dessen Stegbereich und den die Kontaktflächen 114 aufweisenden Schleckbereichen entstehen. Infolge dieses Sättigungsgradienten wird das im Stegbereich aufgesaugte Öl in die Schenkelbereiche des Saugkörpers 110 zu den Schleckbereichen hin durch Kapillarwirkung gefördert. Dies geschieht unabhängig von dem Druck, unter dem das Schmieröl in dem Schlitzbereich 116' steht, und geschieht auch dann, wenn das Schmieröl in dem Schlitzbereich 116' drucklos ist.

In dem Schlitzbereich 116' kann sich ungebundenes Schmieröl bis zu den Absperrventilen 118 verteilen. Wenn die Absperrventile 118 öldruckbedingt öffnen würden, könnte freies Öl durch die stromabwärtigen Schlitzbereiche 116", die Rinnen 120 und die Durchstichkanäle 122 zu den Fettausflußöffnungen an den Abplattungen 124 fließen. Um dies zu verhindern, wird die Öleinfüllung so durchgeführt, daß sich in dem stromaufwärtigen Schlitzbereich 116' zu keiner Zeit ein Öldruck aufbaut, der den Öffnungsdruck der Ventile 118 übersteigt. Dies erfordert eine geeignete gegenseitige Abstimmung verschiedener Parameter, zu denen die Saugfähigkeit des Materials des Saugkörpers 110, die Größe der mit dem ungebundenen Öl in Kontakt stehenden Saugoberfläche des Saugkörpers 110, der von der Ölliefereinheit aufgebrachte Ölfülldruck und die Durchflußrate des eingefüllten Öls, d.h. also das eingefüllte Ölvolumen pro Zeiteinheit, zu zählen sind. Es kann sein, daß die Ölliefereinheit Schmieröl mit einer konstanten Durchflußrate und unter einem konstanten Ölfülldruck abgibt und der Saugkörper 110 das ankommende Schmieröl so rasch aufsaugt, daß sich in dem Schlitzbereich 116' kein Öldruck aufbaut, der zu einem Öffnen der Absperrventile 118 führt würde. Es ist aber auch möglich, daß die Ölliefereinheit den Ölfülldruck oder/und die Durchflußrate des Schmieröls zunächst auf einem vergleichsweise hohen Niveau hält, solange der Schlitzbereich 116' noch leer oder nur wenig gefüllt ist. Wenn sich der Schlitzbereich 116' dann nach und nach mit Schmieröl füllt, weil die Saugfähigkeit und die Förderkapazität des Saugkörpers 110 nicht ausreichen, um das auf den Saugkörper 110 treffende Schmieröl rasch genug in die Schenkelbereiche zu den Kontaktflächen 114 abzutransportieren, senkt die Ölliefereinheit den Ölfülldruck oder/und die Durchflußrate des Schmieröls, so daß sich in dem Schlitzbereich 116' wiederum kein Öldruck aufbauen kann, der den Öffnungsdruck der Absperrventile 118 übersteigt. Insbesondere zum Schluß des Einfüllvorgangs hin, also dann, wenn bereits der größte Teil des Ölvolumens eingefüllt ist, das für die Befüllung des Führungswagens vorgesehen ist, kann das Lieferprogramm der Ölliefereinheit so ausgebildet sein, daß die restlichen Ölmengen nur unter einem sehr geringen Fülldruck und sehr langsam eingefüllt werden. Es ist nämlich davon auszugehen, daß der Saugkörper 110 zu diesem Zeitpunkt annähernd vollständig mit Schmieröl gesättigt ist und nur noch kleine Leerräume im Schlitzbereich 116' und in den Vorratskammern 98 zur Aufnahme dieser Restmengen an Schmieröl verbleiben.

Sollte sich bei der Öleinfüllung dennoch ungewollterweise kurzfristig in dem stromaufwärtigen Schlitzbereich 116' ein Öldruck aufbauen, der zu einem kurzzeitigen Öffnen der Absperrventile 118 führt, können Teile des ungebundenen Schmieröls aus dem stromaufwärtigen Schlitzbereich 116' in den stromabwärtigen Schlitzbereich 116" gelangen. Dieses Schmieröl kann jedoch auch stromabwärts der Absperrventile 118 von dem Saugkörper 110 aufgesaugt werden, weil nämlich die Begrenzungswände des an sich nur für den Fett-Transport reservierten stromabwärtigen Schlitzbereichs 116" teilweise von der Saugoberfläche des Saugkörpers 110 gebildet sind. Somit besteht auch abwärts der Absperrventile 118 eine Verbindung zwischen dem Fett-Transportweg und dem Öltransportweg, die es erlaubt, durch die Absperrventile 118 hindurchtretendes Schmieröl noch in den Öltransportweg umzulenken und einen Ausfluß dieses Schmieröls an den Fettabgabestellen zu verhindern.

Es wird nun der Fall betrachtet, daß eine Fettschmierung beabsichtigt ist. Hierzu wird eine Fettpresse an einen der Eingabeanschlüsse 84-1 bis 84-4 angeschlossen, wobei wiederum ein Schmiernippel in den betreffenden Eingabeanschluß geschraubt werden kann oder eine Fettfüll-Leitung mit einem Schraubgewinde direkt in den betreffenden Eingabeanschluß eingeschraubt werden kann. In die Ausnehmung 108 gelangt das Fett auf dem gleichen Weg, wie er zuvor für den Fall von Schmieröl beschrieben wurde. Da jedoch der Saugkörper 110 eine für Fett undurchdringliche Barriere darstellt und das Fett auch nicht zwischen der Zwischenplatte 34 und dem Wagenhauptkörper 16 entweichen kann, füllt sich der stromaufwärtige Schlitzbereich 116' nach und nach, bis sich in dem Schlitzbereich 11 6' ein Fettdruck aufgebaut hat, der den Öffnungsdruck der Absperrventile 118 übersteigt. Das Fett strömt dann in die stromabwärtigen Schlitzbereiche 116", von wo es durch die Rinnen 120 und die Durchstichkanäle 122 zu den Fettausflußöffnungen an den Abplattungen 124 abfließt. Dieser Weitertransport des Schmierfetts zu den Fettausflußöffnungen erfolgt jedoch nur unter dem Druck des durch die Fettpresse nachgeschobenen Fetts. Wenn die Fettpresse abgenommen wird und damit kein Druck mehr auf das Fett in dem Schlitzbereich 116' ausgeübt wird, schließen die Absperrventile 118 wieder. Das in den stromabwärtigen Schlitzbereichen 116", den Rinnen 120 und den Durchstichkanälen 122 enthaltene Schmierfett verharrt aufgrund seiner hohen Viskosität, so daß kein Nachfließen dieser stromabwärts der Absperrventile 118 vorhandenen Fettmengen zu den Fettausflußöffnungen auftritt.

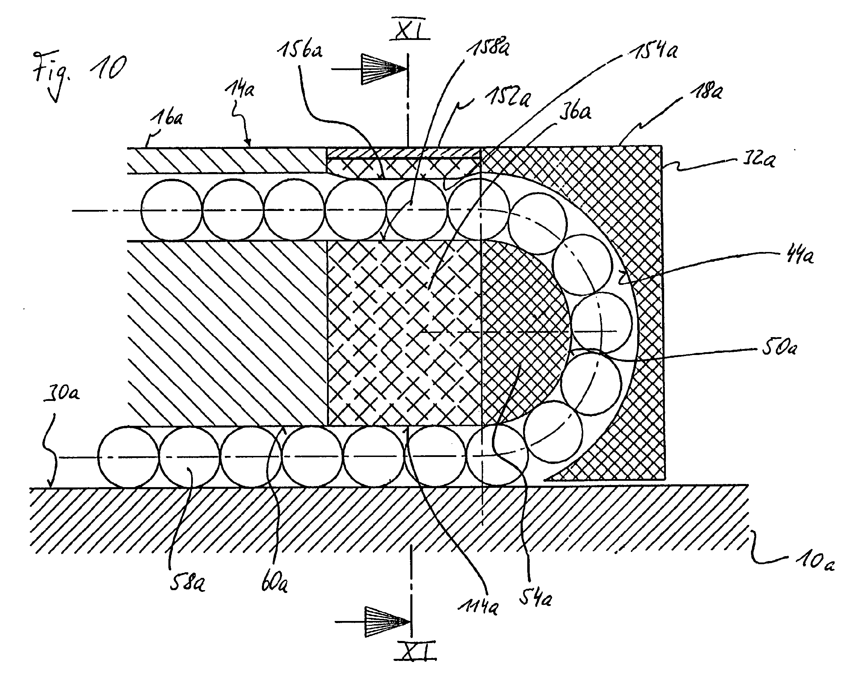

In den Fig. 10-12 sind gleiche oder gleichwirkende Komponenten wie in den Fig. 1 - 9 mit gleichen Bezugszeichen versehen, jedoch ergänzt um einen kleinen Buchstaben. Soweit sich nachstehend nichts anderes ergibt, wird zur Vermeidung von Wiederholungen auf die betreffenden Ausführungen zu den Fig. 1 - 9 verwiesen. Es versteht sich, daß im Zusammenhang mit den Fig. 1 - 9 beschriebene Merkmale, die in den Fig. 10 - 12 jedoch nicht gezeigt sind, bei den Ausführungsbeispielen der Fig. 10 - 12 - ggf. modifiziert - zur Anwendung kommen können, und umgekehrt.

In Fig. 10 ist ein in der Ebene einer Kugelschleife genommener Schnitt durch einen der Schenkelbereiche des Führungswagens 14a gezeigt. Der Schmiereinsatzkörper 36a ist entsprechend der Grundgestalt des Führungswagens 14a U-förmig ausgebildet. Er bildet jedoch kein Einlegeteil, das wie bei dem Ausführungsbeispiel der Fig. 1 - 9 in eine reliefartige Ausnehmung einer Zwischenplatte eingelegt wird. Vielmehr bildet er selbst eine Art von Zwischenplatte, die den axialen Zwischenraum zwischen dem Kopfstück 32 und dem Wagenhauptkörper 16a im wesentlichen vollständig ausfüllt.

Der Schmiereinsatzkörper 36a kann als schmierölaufsaugender Kapillarkörper ausgebildet sein, von dem die Kugeln 58a Schmieröl ohne Einwirkung eines äußeren Schmieröldrucks abschlecken können. Alternativ kann der Schmiereinsatzkörper 36a aus Festschmierstoff bestehen, etwa aus plattenförmig gepreßtem Graphit. Auch bei einem solchen Festschmierstoffkörper findet eine Schmierstoffübertragung auf die Kugeln 58a statt, wenn letztere an dem Festschmierstoffkörper abrollen. Als weitere Alternative kann der Schmiereinsatzkörper 36a aus einem Werkstoff mit einer Schmierstoffbeimischung bestehen. Denkbar ist beispielsweise ein schmierstoffhaltiger Polymerkörper, der aus einem Grundstoff auf Polyethylen-Basis mit einer Schmierstoffzugabe auf Paraffin-Basis hergestellt ist. Bei solchen schmierstoffhaltigen Polymeren kann die Schmierstoffabgabe insbesondere durch die Reibwärme der an den Laufbahnen des Umlaufraums abwälzenden Kugeln 58a und durch mechanische Druckeinwirkung auf den Schmiereinsatzkörper 36a unterstützt werden. Es versteht sich, daß die beiden letzteren Alternativlösungen für das Material des Schmiereinsatzkörpers 36a grundsätzlich auch bei dem Ausführungsbeispiel der Fig. 1 - 9 für die dortige Schmiereinsatzplatte 36 denkbar sind.

Zweckmäßigerweise wird der Schmiereinsatzkörper 36a in einem axial zwischen dem Kopfstück 32a und dem Wagenhauptkörper 16a angeordneten Gehäuse 1 52a untergebracht sein, um einen Schmierstoffaustritt zur Außenseite des Führungswagens 14a'zu verhindern und den Schmiereinsatzkörper 36a vor äußeren Einwirkungen zu schützen. Bei hinreichender Formstabilität des Schmiereinsatzkörpers 36a ist es grundsätzlich nicht ausgeschlossen, auf das Gehäuse 152a zu verzichten.

Ferner ist es denkbar, daß der Schmiereinsatzkörper 36a einstückig mit dem Umlenkkörper 54a ausgebildet ist, so daß nicht nur in den axialen Endbereichen der tragenden oder/und der rücklaufenden Kugelreihe eine Schmierung der Kugeln 58a stattfindet, sondern auch im Bereich der Umlenkbogen-Kugelreihen.

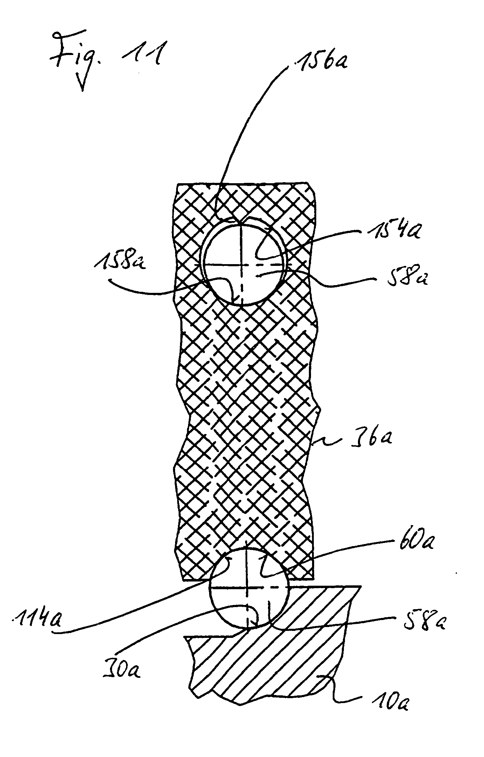

Zur Erläuterung der Kontaktzonen des Schmiereinsatzkörpers 36a mit den Kugeln 58a wird nun zusätzlich auf Fig. 11 verwiesen. Man erkennt dort, daß die tragende Laufbahn 60a des Führungswagens 14a im axialen Bereich des Schmiereinsatzkörpers 36a vollständig von der Schmierkontaktfläche 114a gebildet ist. Diese Lösung eignet sich dann, wenn der Schmiereinsatzkörper 36a aus einem hinreichend belastbaren Werkstoff gefertigt ist. Alternativ oder zusätzlich zur Schmierung im Bereich der tragenden Kugelreihe kann eine Schmierung im Bereich der rücklaufenden Kugelreihe vorgesehen sein. Hierzu weist der Schmiereinsatzkörper 36a eine Rücklaufbohrung 154a auf, welche vollständig von dem Schmiereinsatzkörper 36a umschlossen ist und bündig an den Kugelrücklaufkanal des Wagenhauptkörpers 16a sowie an den Umlenktorus des Kopfstücks 32a anschließt. Die Rücklaufbohrung 154a ist etwas größer als der Kugelquerschnitt bemessen. Ein lippenartiger Vorsprung 156a ragt an einer Umfangsstelle in die Rücklaufbohrung 154a hinein und drückt die rücklaufenden Kugeln 58a unter leichter elastischer Vorspannung gegen eine dem Vorsprung 1 56a diametral gegenüberliegende Schmierkontaktfläche 158a. Der Lippenvorsprung 156a ist so dimensioniert und so flexibel gestaltet, daß der Durchlauf der Kugeln 58a durch die Rücklaufbohrung 154a im wesentlichen unbehindert ist, daß aber zugleich die rücklaufenden Kugeln 58a sicher und großflächig gegen die Umfangswand der Rücklaufbohrung 154a im Bereich der Schmierkontaktfläche 158a angedrückt werden. Auf diese Weise läßt sich eine zuverlässige und ausreichende Schmierung der Kugeln 58a sicherstellen. Insbesondere dann, wenn ein geringer mechanischer Druck notwendig ist, um eine Herauslösung von Schmierstoff aus dem Materialgefüge des Schmierkörpereinsatzes 36a zu bewirken, läßt sich dieser mechanische Druck ohne weiteres mittels des Lippenvorsprungs 1 56a aufbringen.

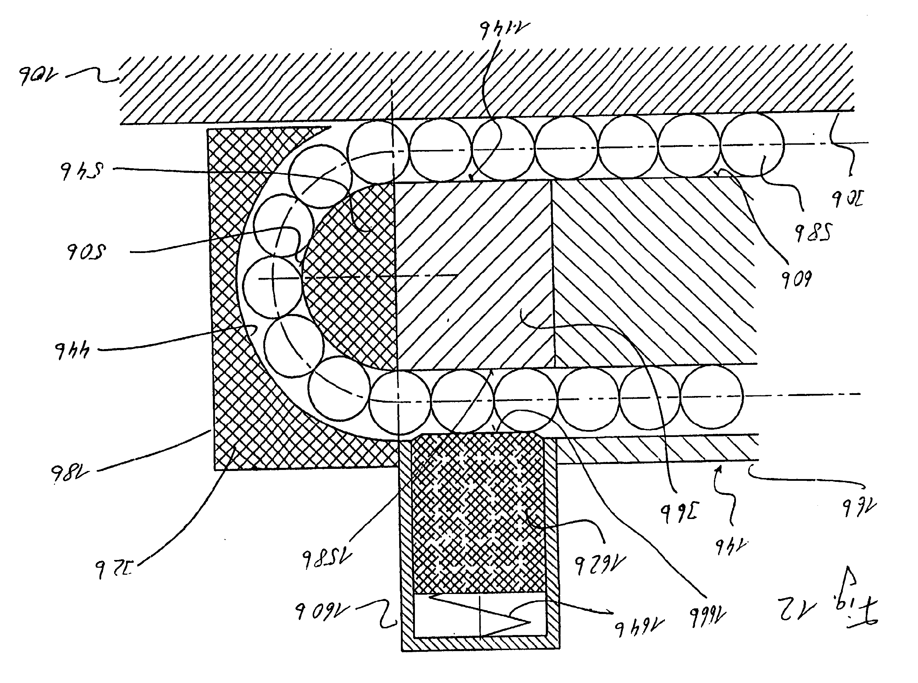

Fig. 12 zeigt ein gegenüber den Fig. 10 und 11 abgewandeltes Ausführungsbeispiel. Man erkennt dort ein zwischen dem Kopfstück 32b und dem Wagenhauptkörper 16b angeordnetes Gehäuse 160b, das einen zusätzlichen Schmierstoffvorrat aufnimmt. Dieser zusätzliche Schmierstoffvorrat besteht beim Ausführungsbeispiel der Fig. 12 aus einem Zusatzschmierkörper 162b, der mittels einer Vorspannfeder 164b gegen die rücklaufenden Kugeln 58b vorgespannt ist und mit einer Kontaktfläche 166b in Schmierkontakt mit den rücklaufenden Kugeln 58b steht. Der Zusatzschmierkörper 162b besteht zweckmäßigerweise aus dem gleichen Werkstoff wie der Schmiereinsatzkörper 36b und arbeitet nach dem gleichen Schmierprinzip. Das Gehäuse 160b kann ohne Demontage des Kopfstücks 32b vom Führungswagen 14b abnehmbar sein, so daß ein leichter Austausch des Zusatzschmierkörpers 162b möglich ist, falls dessen Schmiervermögen aufgebraucht ist oder bei veränderten Einsatzbedingungen der Linearführungseinrichtung, etwa veränderten Arbeitstemperaturen, ein Schmierkörper mit einer anderen Schmierstoffzusammensetzung verwendet werden soll. Falls eine Schmierung der Kugeln 58b mit Schmieröl gewünscht ist, kann das Gehäuse 160b auch zur Bevorratung einer Menge an freiem Schmieröl genutzt werden, welches in nicht näher dargestellter Weise mit dem Schmiereinsatzkörper 36b in Verbindung steht, so daß eine ständige Nachversorgung des Schmiereinsatzkörpers 36b mit frischem Schmieröl gewährleistet ist.

## Patentansprüche

1. Linearführungseinrichtung, umfassend
- eine Führungsschiene (10) mit einer Längsachse (12),
- mindestens einen Führungswagen (14), welcher auf der Führungsschiene (10) unter Verwendung mindestens einer in einem Umlaufraum des Führungswagens (14) umlaufenden Wälzkörperschleife (S1,S2) in Richtung der Längsachse (12) geführt ist,
wobei diese Wälzkörperschleife (S1,S2) eine tragende Wälzkörperreihe in gleichzeitigem Eingriff mit einer tragenden Laufbahn (30) der Führungsschiene (10) und mit einer tragenden Laufbahn des Führungswagens (14), ferner eine rücklaufende Wälzkörperreihe sowie zwei Umlenkbogen-Wälzkörperreihen aufweist,
wobei weiter der Führungswagen (14) von einem Wagenhauptkörper (16) im Längenbereich der tragenden Wälzkörperreihe und von Kopfstückeinheiten (32) an den axial beabstandeten Enden des Wagenhauptkörpers (16) gebildet ist,
wobei weiter Umlenkführungen (44, 46, 50, 52) für die Umlenkbogen-Wälzkörperreihen wenigstens zum Teil an diesen Kopfstückeinheiten (32) ausgebildet sind,
wobei weiter Schmierstoffbedarf an mindestens einem Teil der Wälzflächen (30, 44, 46, 50, 52, 60, 114, 132, 58) besteht und zur Befriedigung dieses Schmierstoffbedarfs ein Schmierstoffwegesystem (110, 114, 116, 120, 122, 130, 132) in dem Führungswagen (14) vorgesehen ist, welches von einem Schmierstoffversorgungsraum (84-1 bis 84-4, 86-1 bis 86-4, 98, 100, 102-1 bis 102-4) des Führungswagens (14) zu Wälzflächen (114, 132, 50, 52) führt,
und wobei dieses Schmierstoffwegesystem (110, 114, 116, 120, 122, 130, 132) wenigstens zum Teil in einem Grenzbereich (bei 34) zwischen mindestens einer Kopfstückeinheit (32) und dem Wagenhauptkörper (16) untergebracht ist,
**dadurch gekennzeichnet,**
**daß** das Schmierstoffwegesystem (110, 114, 116, 120, 122, 130, 132) eine an den Schmierstoffversorgungsraum (84-1 bis 84-4, 86-1 bis 86-4, 98, 100, 102-1 bis 102-4) angeschlossene und wenigstens zum Teil in dem Grenzbereich (bei 34) annähernd in Umfangsrichtung der Führungsschiene (10) verlaufende Schmierölzuführleitung (110, 130) umfasst, welche wenigstens auf einem Teil ihrer Länge von einer druckgefälleunabhängig fördernden Schmierölzuführkapillarleitung (110, 130) gebildet ist, welche in mindestens einem Schleckbereich (bei 114, bei 132) in Schleckkontakt mit Wälzkörpern (58) der mindestens einen Wälzkörperschleife (S1,S2) oder mit der tragenden Laufbahn (30) der Führungsschiene (10) steht.

2. Linearführungseinrichtung nach Anspruch 1,
**dadurch gekennzeichnet,**
**daß** der Führungswagen (14) im wesentlichen U-förmig ausgebildet ist mit einem Stegbereich (26), welcher einer Kopffläche (22) der Führungsschiene (10) benachbart ist, und mit Schenkelbereichen (28), welche je einer Seitenfläche (24) der Führungsschiene (10) benachbart sind, daß die tragende Wälzkörperreihe mindestens je einer Wälzkörperschleife (S1,S2) zwischen je einem Schenkelbereich (28) und je einer Seitenfläche (24) der Führungsschiene (10) angeordnet ist und daß die Schmierölzuführleitung (110,130) entsprechend U-förmig über den Stegbereich (26) und die Schenkelbereiche (28) verläuft.

3. Linearführungseinrichtung nach Anspruch 2,
**dadurch gekennzeichnet,**
**daß** sich die Schmierölzuführkapillarleitung (110,130) annähernd über die Länge des Schenkelbereichs (28) erstreckt.

4. Linearführungseinrichtung nach Anspruch 3,
**dadurch gekennzeichnet,**
**daß** sich die Schmierölzuführkapillarleitung (110,130) auch zumindest über einen Teil des Stegbereichs (26) erstreckt.

5. Linearführungseinrichtung nach einem der Ansprüche 2 - 4,
**dadurch gekennzeichnet,**
**daß** die Schmierölzuführkapillarleitung (110,130) eine im wesentlichen U-förmig verlaufende Leitungsstrecke (110) besitzt, welche sich von der tragenden Wälzkörperreihe der mindestens einen Wälzkörperschleife (S1,S2) des einen Schenkelbereichs (28) zu der tragenden Wälzkörperreihe der mindestens einen Wälzkörperschleife (S1,S2) des anderen Schenkelbereichs (28) erstreckt.

6. Linearführungseinrichtung nach einem der Ansprüche 2 - 5,
**dadurch gekennzeichnet,**
**daß** der Schmierstoffversorgungsraum (84-1 bis 84-4,86-1 bis 86-4,98,100,102-1 bis 102-4) im Stegbereich (26) des U-förmigen Führungswagens (14) angeordnet ist, insbesondere im Stegbereich (32-1) mindestens einer Kopfstückeinheit (32).

7. Linearführungseinrichtung nach einem der Ansprüche 1 - 6,
**dadurch gekennzeichnet,**
**daß** der Schleckbereich (bei 114, bei 132) sich über wenigstens einen Teil, insbesondere über einen wesentlichen Teil, der Länge der tragenden oder/und der rücklaufenden Wälzkörperreihe erstreckt.

8. Linearführungseinrichtung nach Anspruch 7,
**dadurch gekennzeichnet,**
**daß** der Schleckbereich (bei 114, bei 132) von einer Lauffläche des Umlaufraums gebildet ist.

9. Linearführungseinrichtung nach einem der Ansprüche 1-8,
**dadurch gekennzeichnet,**
**daß** das Schmierstoffwegesystem wenigstens zum Teil in einer Zwischenplatteneinheit (34) untergebracht ist, welche zwischen einem axialen Ende des Wagenhauptkörpers (16) und der zugehörigen Kopfstückeinheit (32) angeordnet ist.

10. Linearführungseinrichtung nach Anspruch 9,
**dadurch gekennzeichnet,**
**daß** die Zwischenplatteneinheit (34) wenigstens zum Teil aus schmieröldichtem Werkstoff, insbesondere Kunststoff, besteht.

11. Linearführungseinrichtung nach Anspruch 9 oder 10,
**dadurch gekennzeichnet,**
**daß** die Zwischenplatteneinheit (34) an dem Wagenhauptkörper (16) und/oder an der Kopfstückeinheit (32) schmieröldicht anliegt.

12. Linearführungseinrichtung nach einem der Ansprüche 9 - 11,
**dadurch gekennzeichnet,**
**daß** die Zwischenplatteneinheit (34) eine Ausnehmung (108) zur wenigstens teilweisen Aufnahme der Schmierölzuführkapillarleitung (110,130) aufweist.

13. Linearführungseinrichtung nach Anspruch 12,
**dadurch gekennzeichnet,**
**daß** die Ausnehmung (108) wenigstens auf einem Teil ihrer in Umfangsrichtung der Führungsschiene (10) verlaufenden Länge von der Schmierölzuführkapillarleitung (110,130) im wesentlichen vollständig ausgefüllt ist.

14. Linearführungseinrichtung nach Anspruch 12 oder 13,
**dadurch gekennzeichnet,**
**daß** die Ausnehmung (108) in der Zwischenplatteneinheit (34) reliefartig ausgebildet ist und zum Wagenhauptkörper (16) hin freiliegt.

15. Linearführungseinrichtung nach einem der Ansprüche 12 - 14,
**dadurch gekennzeichnet,**
**daß** die Ausnehmung (108) Verbindungsöffnungen (100,102-1 bis 102-4) aufweist, durch welche sie mit dem Schmierstoffversorgungsraum (84-1 bis 84-4,86-1 bis 86-4,98,100,102-1 bis 102-4) in Verbindung steht.

16. Linearführungseinrichtung nach einem der Ansprüche 9-15,
**dadurch gekennzeichnet,**
**daß** an der Zwischenplatteneinheit (34) eine bogeninnere Umlenkfläche (50,52) für die jeweilige Umlenkbogen-Wälzkörperreihe angebracht ist.

17. Linearführungseinrichtung nach Anspruch 14 und 16,
**dadurch gekennzeichnet,**
**daß** die bogeninnere Umlenkfläche (50,52) auf der von der reliefartigen Ausnehmung (108) abgelegenen Seite der Zwischenplatteneinheit (34) angeformt ist.

18. Linearführungseinrichtung nach einem der Ansprüche 2-17,
**dadurch gekennzeichnet,**
**daß** in mindestens einem Schenkelbereich (28) des Führungswagens (14) eine Mehrzahl von Wälzkörperschleifen (S1,S2) vorgesehen ist und daß die Schmierölzuführkapillarleitung (110,130) in Schleckkontakt mit den Wälzkörpern (58) mehrerer Wälzkörperschleifen (S1,S2) steht.

19. Linearführungseinrichtung nach einem der Ansprüche 1-18,
**dadurch gekennzeichnet,**
**daß** das Schmierstoffwegesystem eine Schmierfettzuführleitung (116,120,122) von dem Schmierstoffversorgungsraum (84-1 bis 84-4,86-1 bis 86-4,98,100,102-1 bis 102-4) zu mindestens einer Schmierfettmündungsstruktur (124) umfaßt, an welcher die Schmierfettzuführleitung (116,120,122) in den Umlaufraum oder in die Laufbahn (30) der Führungsschiene (10) einmündet.

20. Linearführungseinrichtung nach Anspruch 19,
**dadurch gekennzeichnet,**
**daß** die Schmierfettzuführleitung (116,120,122) und die Schmierölzuführkapillarleitung (110,130) wenigstens auf einem Teil ihrer Länge parallel zueinander verlaufen, wobei die Schmierölzuführkapillarleitung (110,130) mindestens einen Teil der Querschnittsbegrenzung der Schmierfettzuführleitung (116,120,122) bildet.

21. Linearführungseinrichtung nach Anspruch 20,
**dadurch gekennzeichnet,**
**daß** die Schmierfettzuführleitung (116,120,122) wenigstens auf einem Teil ihrer Länge in einem Schlitz (116) der Schmierölzuführkapillarleitung (110,130) verläuft.

22. Linearführungseinrichtung nach einem der Ansprüche 19 - 21,
**dadurch gekennzeichnet,**
**daß** die Schmierölzuführkapillarleitung (110,130) wenigstens teilweise in einer Zwischenplatteneinheit (34) untergebracht ist, welche im Bereich einer Umlenkbogen-Wälzkörperreihe einen bogeninneren Umlenkkörper (54) bildet, und daß im Anschluß an einen von der Schmierölzuführkapillarleitung (110,130) wenigstens teilweise begrenzten Leitungsabschnitt (116) der Schmierfettzuführleitung (116,120,122) diese innerhalb des Umlenkkörpers (54) bis zu mindestens einer Schmierfettmündungsstruktur (124) fortgesetzt ist.

23. Linearführungseinrichtung nach Anspruch 22,
**dadurch gekennzeichnet,**
**daß** der Umlenkkörper (54) einer Mehrzahl von Wälzkörperschleifen (S1,S2) gemeinsam ist und daß die Schmierfettzuführleitung (116,120,122) innerhalb des Umlenkkörpers (54) zu mehreren Wälzkörperschleifen hin verzweigt (bei 124) ist.

24. Linearführungseinrichtung nach Anspruch 23,
**dadurch gekennzeichnet,**
**daß** der Umlenkkörper (54) zwischen zwei nebeneinander liegenden Umlenkflächen (50,52) für benachbarte Wälzkörperschleifen (S1,S2) eine Schmierfettmündungsstruktur (124) besitzt.

25. Linearführungseinrichtung nach einem der Ansprüche 19 - 24,
**dadurch gekennzeichnet,**
**daß** die Schmierfettzuführleitung (116,120,122) eine Absperrstelle (118) enthält, welche stromaufwärts der Schmierfettmündungsstruktur (124) liegt und durch Schmierfettdruck geöffnet werden kann.

26. Linearführungseinrichtung nach einem der Ansprüche 1 - 25,
**dadurch gekennzeichnet,**
**daß** an dem Führungswagen (14) eine Mehrzahl von wahlweise zur Schmierstoffeingabe benutzbaren Schmierstoffeingabeanschlüssen (84-1 bis 84-4) angebracht ist, daß einzelnen oder Gruppen solcher Schmierstoffeingabeanschlüsse (84-1 bis 84-4) jeweils ein Ventilelement (128) zugeordnet ist und daß diese Ventilelemente (128) voneinander derart unabhängig sind, daß bei Anlegen eines vorbestimmten Schmierstoffeingabedrucks an einem der Schmierstoffeingabeanschlüsse (84-1 bis 84-4) nur das diesem zugehörige Ventilelement (128) öffnet.

27. Linearführungseinrichtung nach Anspruch 26,
**dadurch gekennzeichnet,**
**daß** die Ventilelemente (128) innerhalb einer Kopfstückeinheit (32) und/oder an einer Zwischenplatteneinheit (34) angebracht sind, welche zwischen der Kopfstückeinheit (32) und dem Wagenhauptkörper (16) liegt.

28. Linearführungseinrichtung nach Anspruch 27,
**dadurch gekennzeichnet,**
**daß** die Ventilelemente (128) aus dem jeweiligen Werkstoff der Kopfstückeinheit (32) bzw. der Zwischenplatteneinheit (34) gebildet sind.

29. Linearführungseinrichtung nach einem der Ansprüche 1 - 28,
**dadurch gekennzeichnet,**
**daß** Schmierstoffeingabeanschlüsse (84-1 bis 84-4) an dem Führungswagen (14) angeordnet sind, welche an den Schmierstoffversorgungsraum (84-1 bis 84-4,86-1 bis 86-4,98,100,102-1 bis 102-4) angeschlossen sind.

30. Linearführungseinrichtung nach Anspruch 29,
**dadurch gekennzeichnet,**
**daß** der Schmierstoffversorgungsraum (84-1 bis 84-4,86-1 bis 86-4,98,100,102-1 bis 102-4) durch einen gemeinsamen Schmierstoffeingabeanschluß (84-1 bis 84-4) wahlweise mit Schmieröl oder mit Schmierfett beschickbar ist.

31. Linearführungseinrichtung nach Anspruch 29 oder 30,
**dadurch gekennzeichnet,**
**daß** die Schmierstoffeingabeanschlüsse (84-1 bis 84-4) an einem Kunststoffteil, insbesondere an einer Kopfstückeinheit (32) des Führungswagens (14), angebracht sind.

32. Linearführungseinrichtung nach Anspruch 31,
**dadurch gekennzeichnet,**
**daß** die Schmierstoffeingabeanschlüsse (84-1 bis 84-4) eine Mehrzahl von Schmierstoffeingabeanschlüssen (84-1 bis 84-4) umfassen und daß an dem Kunststoffteil (32) ein Armierungsteil (40), insbesondere aus metallischem Werkstoff, angebracht ist, welcher Anschlußkomponenten (148) für die Schmierstoffeingabeanschlüsse (84-1 bis 84-4) trägt.

33. Linearführungseinrichtung nach Anspruch 32,
**dadurch gekennzeichnet,**
**daß** die Anschlußkomponenten (148) als Innengewindebuchsen ausgebildet sind, welche mit jeweils einer Anschlußbohrung der Schmierstoffeingabeanschlüsse (84-1 bis 84-4) in Deckung stehen.

## Claims

1. A linear guide device, comprising:
- a guide rail (1) having a longitudinal axis (12),
- at least one guide carriage (14) guided on said guide rail (10) in the direction of said longitudinal axis (12) by means of at least one rolling member loop (S1, S2) circulating in a circulation space of said guide carriage (14),
wherein said rolling member loop (S1, S2) includes a bearing row of rolling members in simultaneous engagement with a bearing track (30) of said guide rail (10) and a bearing track of said guide carriage (14), further a returning row of rolling members and two arcuate rows of rolling members,
wherein further said guide carriage (14) comprises a carriage main body (16) in the longitudinal direction of said earing row of rolling members and end units (32) at the axially spaced ends of said carriage main body (16),
wherein further reversing guides (44, 46, 50, 52) for said arcuate rows of rolling members are formed at least partly on said end units (32),
wherein further a lubricant demand exists on at least a part of the roll surfaces (30, 44, 46, 50, 52, 60, 114, 132, 58) and in order to overcome this lubricant demand a lubricant path system (110, 114, 116, 120, 122, 130, 132) is provided in said guide carriage (14), which extends from a lubricant supply space (84-1 to 84-4, 86-1 to 86-4, 98, 100, 102-1 to 102-4) of the guide carriage (14) to roll surfaces (114, 132, 50, 52),
and wherein this lubricant way system (110, 114, 116, 120, 122, 130, 132) is accommodated at least in part in a boundary region (at 34) between at least one end unit (32) and said carriage main body (16), **characterized in that** the lubricant path system (110, 114, 116, 120, 122, 130, 132) comprises a lubricating oil supply line (110, 130) connected to said lubricant supply space (84-1 to 84-4, 86-1 to 86-4, 98, 100, 102-1 to 102-4) and extending at least in part in said boundary region (at 34) approximately in circumferential direction of said guide rail (110), which lubricating oil supply line (110, 130) is formed at least on a part of its length of a lubricating oil supply capillary line (110, 130) supplying lubricating oil irrespective of a pressure difference, said lubricating oil supply capillary line being in licking contact with rolling members (58) of said at least one rolling member loop (S1, S2) or with said bearing track (30) of said guide rail (10) in at least one licking region (at 114, at 132).

2. The linear guide device, **characterized in that** said guide carriage (14) is substantially U-shaped and has a web portion (26) adjacent a top surface (22) of said guide rail (10) and flange portions (28) each adjacent a side surface (24) of said guide rail (10), that between each of said flange portions (28) and the respective side surface (24) of said guide rail (10) there is located said bearing row of rolling members of at least one rolling member loop (S1, S2) and that said lubricant oil supply line (110, 130) extends along said web portion (26) and said flange portion (28) in correspondence to said U-shape.

3. The linear guide device of claim 2, **characterized in that** said lubricant oil supply capillary line (110, 130) extends approximately over the length of said flange portion (28).

4. The linear guide device of claim 3, **characterized in that** said lubricating oil supply capillary line (110, 130) extends also at least over a part of said web portion (26).

5. The linear guide device of one of claims 2 to 4, **characterized in that** said lubricating oil supply capillary line (110, 130) comprises a line section (110) substantially extending according to a U-shape, said line section extending from said bearing row of rolling members of said at least one rolling member loop (S1, S2) of said one flange portion (28) to said bearing row of rolling members of said at least one rolling member loop (S1, S2) of said other flange portion (28).

6. The linear guide device of one of claims 2 to 5, **characterized in that** said lubricant supply space (84-1 to 84-4, 86-1 to 86-4, 98, 100, 102-1 ot 102-4) is disposed in said web portion (26) of said U-shaped guide carriage (14), in particular in a web portion (32-1) of at least one end unit (32).

7. The linear guide device of one of claims 1 to 6, **characterized in that** said licking region (at 114, at 132) extends over at least a part, in particular a substantial part, of the length of at least one of said bearing and returning rows of rolling members.

8. The linear guide device of claim 7, **characterized in that** said licking region (at 114, at 132) is formed of a track surface of said circulation space.

9. The linear guide device of one of claims 1 to 8, **characterized in that** said lubricant path system is accommodated at least in part in an intermediate plate unit (34) which is disposed between an axial end of said carriage main body (16) and the associated end unit (32).

10. The linear guide device of claim 9, **characterized in that** said intermediate plate unit (34) is formed at lest in part of an oil-tight material, in particular a plastics material.

11. The linear guide device of claim 9 or 10, **characterized in that** said intermediate plate unit (34) abuts on at least one of said carriage main body (16) and said end unit (32) in an oil-tight manner.

12. The linear guide device of one of claims 9 to 11, **characterized in that** said intermediate plate unit (34) has a recess (108) for accommodating at least in part said lubricating oil supply capillary line (110, 130).

13. The linear guide device of claims 12, **characterized in that** said recess (108), at least on a part of its length extending in circumferential direction of said guide rail (10), is substantially entirely filled with said lubricating oil supply capillary line (110, 130).

14. The linear guide device of claim 12 or 13, **characterized in that** said recess (108) is formed in said intermediate plate unit (134) in a relief-type manner and is opened towards said carriage main body (16).

15. The linear guide device of one of claims 12 to 14, **characterized in that** said recess (108) has communication openings (100, 102-1 to 102-4) through which it communicates with said lubricant supply space (84-1 to 84-4, 86-1 to 86-4, 98, 100, 102-1 to 102-4).

16. The linear guide device of one of claims 9 to 15, **characterized in that** an inner arcuate reversing surface (50, 52) for the respective arcuate row of rolling members is formed on said intermediate plate unit (34).

17. The linear guide device of claims 14 and 16, **characterized in that** said inner arcuate reversing surface (50, 52) is disposed on a side of said intermediate plate unit (34) opposite to said relief-type recess (108).

18. The linear guide device of one of claims 2 to 17, **characterized in that** a plurality of rolling member loops (S1, S2) is provided in at least one of said flange portions (28) of said guide carriage (14) and that said lubricating oil supply capillary line (110, 130) is in licking contact with rolling members (58) of a plurality of rolling member loops (S1, S2).

19. The linear guide device of one of claims 1 to 18, **characterized in that** said lubricant path system comprises a lubricating grease supply line (116, 120, 122) from said lubricant supply space (84-1 to 84-4, 86-1 to 86-4, 98, 100, 102-1 to 102-4) to at least one lubricating grease outlet structure (124), said lubricating grease supply line terminating into said circulation space or said track (30) of said guide rail (10) at said lubricating grease outlet structure.

20. The linear guide device of claim 19, **characterized in that** said lubricating grease supply line (116, 120, 122) and said lubricating oil supply capillary line (110, 130) extend parallel to each other at least on a part of their length, said lubricating oil supply capillary line (110, 130) forming at least a part of a cross-sectional periphery of said lubricating grease supply line (116, 120, 122).

21. The linear guide device of claim 20, **characterized in that** said lubricating grease supply line (116, 120, 122) extends at least on a part of its length in a slit (116) of said lubricating oil supply capillary line (110, 130).

22. The linear guide device of one of claims 19 to 21, **characterized in that** said lubricating oil supply capillary line (110, 130) is accommodated at least in part in an intermediate plate unit (34) which forms an inner reversing member (54) in the region of an arcuate row of rolling members and that said lubricating grease supply line (116, 120, 122), in prolongation of a line section (116) thereof which is at least partly confined by said lubricating oil supply capillary line (110, 130), is prolongated within said reversing member (54) up to at least one lubricating grease outlet structure (124).

23. The linear guide device of claim 22, **characterized in that** said reversing member (54) is common to a plurality of rolling member loops (S1, S2) and that said lubricating grease supply line (116, 120, 122) is branched off (at 124) towards a plurality of rolling member loops within said reversing member (54).

24. The linear guide device of claim 23, **characterized in that** said reversing member (54) comprises a lubricating grease outlet structure (124) between two adjacent reversing surfaces (50, 52) for adjacent rolling member loops (S1, S2).

25. The linear guide device of one of claims 19 to 24, **characterized in that** said lubricating grease supply line (116, 120, 122) comprises a shut-off portion (118) upstream of said lubricating grease outlet structure (124) and openable by lubricating grease pressure.

26. The linear guide device of one of claims 1 to 25, **characterized in that** said guide carriage (14) comprises a plurality of lubricant introduction terminals (84-1 to 84-4) which can be selectively used for introduction of lubricant, that a valve member (128) is allocated to each of individual ones or groups of said lubricant introduction terminals (84-1 to 84-4) and that said valve members (128) are independent from one another such that when applying a predetermined lubricant introduction pressure to one of said lubricant introduction terminals (84-1 to 84-4) only the respective allocated valve member (128) opens.

27. The linear guide device of claim 26, **characterized in that** said valve members (128) are mounted on at least one of an end unit (32) and an intermediate plate unit (34) arranged between said end unit (32) and said carriage main body (16).

28. The linear guide device of claims 27, **characterized in that** said valve members (128) are made of the same material as said end unit (32) and said intermediate plate unit (34), respectively.

29. The linear guide device of one of claims 1 to 28, **characterized in that** said guide carriage (14) comprises lubricant introduction terminals (84-1 to 84-4) connected to said lubricant supply space (84-1 to 84-4, 86-1 to 86-4, 98, 100, 102-1 to 102-4).

30. The linear guide device of claim 29, **characterized in that** said lubricant supply space (84-1 to 84-4, 86-1 to 86-4, 98, 100, 102-1 to 102-4) may be selectively charged with lubricating oil or lubricating grease through a common lubricant introduction terminal (84-1 to 84-4).

31. The linear guide device of claim 29 or 30, **characterized in that** said lubricant introduction terminals (84-1 to 84-4)is mounted on a plastics member, in particular an end unit (32) of said guide carriage (14).

32. The linear guide device of claim 31, **characterized in that** said lubricant introduction terminals (84-1 to 84-4) comprises a plurality of lubricant introduction terminals (84-1 to 84-4) and that an armouring member (40), in particular made of a metal material, is mounted on said plastics member (32), said armouring member (40) comprising connection components (148) for said lubricant introduction terminals (84-1 to 84-4).

33. The linear guide device of claim 32, **characterized in that** said connection components (148) are formed as internal screw thread sockets which each are aligned with a respective connection bore of said lubricant introduction terminals (84-1 to 84-4).

## Revendications

1. Dispositif de guidage linéaire comportant
- un rail de guidage (10) avec un axe longitudinal (12),
- au moins un chariot de guidage (14) qui est guidé dans la direction de l'axe longitudinal (12) sur le rail de guidage (10) moyennant l'utilisation d'au moins une boucle de corps de roulement (S1, S2) continue dans un espace de déplacement du chariot de guidage (14),
cette boucle de corps de roulement (S1, S2) comportant une rangée de corps de roulements portante qui est simultanément en prise avec une piste de roulement (30) portante du rail de guidage (10) et avec une piste de roulement portante du chariot de guidage (14), par ailleurs, une rangée de corps de roulement de retour, ainsi que deux rangées de corps de roulement à courbe de renvoi,
le chariot de guidage (14) étant par ailleurs formé par un corps principal de chariot (16), ayant une longueur correspondant à celle de la rangée de corps de roulement portante, et par des unités de tête (32) situées aux extrémités opposées dans le sens axial du corps principal de chariot (16),
pour les rangées de corps de roulement à courbe de renvoi, des glissières de renvoi (44, 46, 50, 52) étant par ailleurs réalisées, au moins partiellement, au niveau de ces unités de tête (32),
sachant que, par ailleurs, il existe un besoin en lubrifiant sur au moins une partie des surfaces de roulement (30, 44, 46, 50, 52, 60, 114, 132, 58) et que pour répondre à ce besoin de lubrifiant, il est prévu dans le chariot de guidage (14) un système de circulation du lubrifiant (110, 114, 116, 120, 122, 130, 132), qui mène depuis une chambre de distribution de lubrifiant (84-1 à 84-4, 86-1 à 86-4, 98, 100, 102-1 à 102-4) du chariot de guidage (14) vers les surfaces de roulement (114, 132, 50, 52),
et ce système de circulation du lubrifiant (110, 114, 116, 120, 122, 130, 132) étant logé, au moins partiellement, dans une zone limite (en 34) entre au moins une unité de tête (32) et le corps principal de chariot (16),
**caractérisé en ce que**
le système de circulation du lubrifiant (110, 114, 116, 120, 122, 130, 132) comporte une conduite d'acheminement de lubrifiant (110, 132) qui est reliée à la chambre de distribution de lubrifiant (84-1 à 84-4, 86-1 à 86-4, 98, 100, 102-1 à 102-4) et qui s'étend au moins partiellement dans la zone limite (en 34) approximativement dans la direction périphérique du rail de guidage (10), et qui est formée au moins sur une partie de sa longueur par une conduite capillaire d'acheminement de l'huile de lubrification (110, 130) qui transporte le lubrifiant indépendamment d'une chute de pression et qui est en contact par effleurement dans au moins une zone d'effleurement (en 114, en 132) avec les corps de roulement (58) d'au moins une boucle de corps de roulement (S1, S2) ou avec la piste de roulement (30) portante du rail de guidage (10).

2. Dispositif de guidage linéaire selon la revendication 1, **caractérisé en ce que**
le chariot de guidage (14) est réalisé sensiblement en forme de U comportant une zone plane (26) qui est voisine d'une surface supérieure (22) du rail de guidage (10) et des branches (28) qui sont chacune voisines d'une surface latérale (24) du rail de guidage (10), **en ce que** la rangée de corps de roulement portante de chacune des boucles de corps de roulement (S1, S2) est disposée respectivement entre une branche (28) et une surface latérale (24) du rail de guidage (10), et **en ce que** la conduite d'acheminement de l'huile de lubrification (110, 130) s'étend de manière correspondante en forme de U au-dessus de la zone plane (26) et des branches (28).

3. Dispositif de guidage linéaire selon la revendication 2,
**caractérisé en ce que**
la conduite capillaire d'acheminement de l'huile de lubrification (110, 130) s'étend approximativement sur toute la longueur de la branche (28).

4. Dispositif de guidage linéaire selon la revendication 3,
**caractérisé en ce que**
la conduite capillaire d'acheminement de l'huile de lubrification (110, 130) s'étend également sur une partie au moins de la zone plane (26).

5. Dispositif de guidage linéaire selon l'une quelconque des revendications 2 à 4,
**caractérisé en ce que**
la conduite capillaire d'acheminement de l'huile de lubrification (110, 130) comporte un tronçon de conduite (110) sensiblement en forme de U, lequel s'étend depuis la rangée de corps de roulement portante d'au moins une boucle de corps de roulement (S1, S2) de l'une des branches (28) vers la rangée de corps de roulement portante d'au moins une boucle de corps de roulement (S1, S2) de l'autre branche (28).

6. Dispositif de guidage linéaire selon l'une quelconque des revendications 2 à 5,
**caractérisé en ce que**
la chambre de distribution de lubrifiant (84-1 à 84-4, 86-1 à 86-4, 98, 100, 102-1 à 102-4) est agencée dans la zone plane (26) du chariot de guidage (14) en forme de U, en particulier dans la zone plane (32-1) d'au moins une des unités de tête (32).

7. Dispositif de guidage linéaire selon l'une quelconque des revendications 1 à 6,
**caractérisé en ce que**
la zone d'effleurement (en 114, en 132) s'étend au moins sur une partie, en particulier sur une partie importante, de la longueur de la rangée de corps de roulement portante et/ou de la rangée de corps de roulement de retour.

8. Dispositif de guidage linéaire selon la revendication 7,
**caractérisé en ce que**
la zone d'effleurement (en 114, en 132) est formée par une surface de roulement de l'espace de déplacement.

9. Dispositif de guidage linéaire selon l'une quelconque des revendications 1 à 8,
**caractérisé en ce que**
le système de circulation du lubrifiant est logé au moins partiellement dans une unité de plaque intermédiaire (34) qui est disposée entre une extrémité axiale du corps principal (16) du chariot et l'unité de tête (32) associée.

10. Dispositif de guidage linéaire selon la revendication 9,
**caractérisé en ce que**
l'unité de plaque intermédiaire (34) est réalisée au moins partiellement dans un matériau étanche à l'huile de lubrification, en particulier dans une matière plastique.

11. Dispositif de guidage linéaire selon la revendication 9 ou 10,
**caractérisé en ce que**
l'unité de plaque intermédiaire (34) vient en appui, de manière étanche à l'huile de lubrification, contre le corps principal de chariot (16) et/ou contre l'unité de tête (32).

12. Dispositif de guidage linéaire selon l'une quelconque des revendications 9 à 11,
**caractérisé en ce que**
l'unité de plaque intermédiaire (34) comporte un évidement (108) destiné à recevoir au moins partiellement la conduite capillaire d'acheminement de l'huile de lubrification (110, 130).

13. Dispositif de guidage linéaire selon la revendication 12, **caractérisé en ce que**
l'évidement (108) est pour l'essentiel entièrement comblé par la conduite capillaire d'acheminement de l'huile de lubrification (110, 130) au moins sur une partie de sa longueur dans le sens périphérique du rail de guidage (10).

14. Dispositif de guidage linéaire selon la revendication 12 ou 13,
**caractérisé en ce que**
l'évidement (108) est réalisé en forme de creux dans l'unité de plaque intermédiaire (34) et est ouvert vers le corps principal (16) du chariot.

15. Dispositif de guidage linéaire selon l'une quelconque des revendications 12 à 14,
**caractérisé en ce que**
l'évidement (108) comporte des orifices de raccordement (100, 102-1 à 102-4) par l'intermédiaire desquels il communique avec la chambre de distribution de lubrifiant (84-1 à 84-4, 86-1 à 86-11, 98, 100, 102-1 à 102-4).

16. Dispositif de guidage linéaire selon l'une quelconque des revendications 9 à 15,
**caractérisé en ce qu'**
une surface de renvoi (50, 52) à courbure intérieure est réalisée sur l'unité de plaque intermédiaire (34) pour chacune des rangées de corps de roulement à courbe de renvoi.

17. Dispositif de guidage linéaire selon les revendications 14 et 16,
**caractérisé en ce que**
la surface de renvoi (50, 52) à courbure intérieure est formée sur la face de l'unité de plaque intermédiaire (34) éloignée de l'évidement (108) en forme de creux.

18. Dispositif de guidage linéaire selon l'une quelconque des revendications 2 à 17,
**caractérisé en ce qu'**
il est prévu une pluralité de boucles de corps de roulement (S1, S2) dans au moins une des branches (28) du chariot de guidage (14), et **en ce que** la conduite capillaire d'acheminement de l'huile de lubrification (110, 130) est en contact par effleurement avec les corps de roulement (58) de plusieurs boucles de corps de roulement (S1, S2).

19. Dispositif de guidage linéaire selon l'une quelconque des revendications 1 à 18,
**caractérisé en ce que**
le système de circulation du lubrifiant comporte une conduite d'acheminement de graisse de lubrification (116, 120, 122) qui mène depuis la chambre de distribution de lubrifiant (84-1 à 84-4, 86-1 à 86-4, 98, 100, 102-1 à 102-4) vers au moins une structure d'embouchure pour la graisse de lubrification (124), au niveau de laquelle la conduite d'acheminement de graisse de lubrification (116, 120, 122) débouche dans l'espace de déplacement ou dans la piste de roulement (30) du rail de guidage (10).

20. Dispositif de guidage linéaire selon la revendication 19,
**caractérisé en ce que**
la conduite d'acheminement de graisse de lubrification (116, 120, 122) et la conduite capillaire d'acheminement de l'huile de lubrification (110, 130) sont parallèles entre elles au moins sur une partie de leur longueur, la conduite capillaire d'acheminement de l'huile de lubrification (110, 130) formant au moins une partie de la délimitation de la section de la conduite d'acheminement de graisse de lubrification (116, 120, 122).

21. Dispositif de guidage linéaire selon la revendication 20,
**caractérisé en ce que**
la conduite d'acheminement de graisse de lubrification (116, 120, 122) s'étend sur au moins une partie de sa longueur dans une fente (116) de la conduite capillaire d'acheminement de l'huile de lubrification (110, 130).

22. Dispositif de guidage linéaire selon l'une quelconque des revendications 19 à 21,
**caractérisé en ce que**
la conduite capillaire d'acheminement de l'huile de lubrification (110, 130) est logée au moins partiellement dans une unité de plaque intermédiaire (34), qui forme dans la zone d'une rangée de corps de roulement à courbe de renvoi un corps de renvoi (54) à courbure intérieure, et **en ce que**, dans le prolongement d'un tronçon de conduite (116) de la conduite d'acheminement de graisse de lubrification (116, 120, 122), lequel est délimité au moins partiellement par la conduite capillaire d'acheminement de l'huile de lubrification (110, 130), ladite conduite d'acheminement de graisse de lubrification (116, 120, 122) est prolongée à l'intérieur du corps de renvoi (54) jusqu'à au moins une structure d'embouchure pour la graisse de lubrification (124).

23. Dispositif de guidage linéaire selon la revendication 22,
**caractérisé en ce que**
le corps de renvoi (54) est commun à une pluralité de boucles de corps de roulement (S1, S2), et **en ce que** la conduite d'acheminement de graisse de lubrification (116, 120, 122) se ramifie (en 124) vers plusieurs boucles de corps de roulement à l'intérieur du corps de renvoi (54).

24. Dispositif de guidage linéaire selon la revendication 23,
**caractérisé en ce que**
le corps de renvoi (54) comporte, entre deux surfaces de renvoi (50, 52) disposées côte à côte, une structure d'embouchure pour la graisse de lubrification (124) des boucles de corps de roulement (S1, S2) adjacentes.

25. Dispositif de guidage linéaire selon l'une quelconque des revendications 19 à 24,
**caractérisé en ce que**
la conduite d'acheminement de graisse de lubrification (116, 120, 122) comporte un lieu d'obturation (118) qui est situé en amont de la structure d'embouchure pour la graisse de lubrification (124) et qui peut être ouvert sous l'effet de la pression de la graisse de lubrification.

26. Dispositif de guidage linéaire selon l'une quelconque des revendications 1 à 25,
**caractérisé en ce qu'**
une pluralité de raccords d'alimentation de lubrifiant (84-1 à 84-4) sont montés sur le chariot de guidage (14) et peuvent être utilisés au choix pour l'admission de lubrifiant, **en ce qu'**un élément de vanne (128) est associé respectivement à de tels raccords d'alimentation de lubrifiant (84-1 à 84-4) individuels ou à des groupes de tels raccords, et **en ce que** ces éléments de vanne (128) sont indépendants les uns des autres, de telle sorte que lors de l'application d'une pression d'introduction de lubrifiant prédéterminée au niveau de l'un des raccords d'alimentation de lubrifiant (84-1 à 84-4), s'ouvre uniquement l'élément de vanne (128) associé à ce dernier.

27. Dispositif de guidage linéaire selon la revendication 26,
**caractérisé en ce que**
les éléments de vanne (128) sont montés à l'intérieur d'une unité de tête (32) et/ou sur une unité de plaque intermédiaire (34), qui est disposée entre l'unité de tête (32) et le corps principal de chariot (16).

28. Dispositif de guidage linéaire selon la revendication 27,
**caractérisé en ce que**
les éléments de vanne (128) sont réalisés dans le matériau correspondant de l'unité de tête (32) ou de l'unité de plaque intermédiaire (34).

29. Dispositif de guidage linéaire selon l'une quelconque des revendications 1 à 28,
**caractérisé en ce que**
sur le chariot de guidage (14) sont disposés des raccords d'alimentation de lubrifiant (84-1 à 84-4) qui communiquent avec la chambre de distribution de lubrifiant (84-1 à 84-4, 86-1 à 86-4, 98, 100, 102-1 à 102-4).

30. Dispositif de guidage linéaire selon la revendication 29,
**caractérisé en ce que**
la chambre de distribution de lubrifiant (84-1 à 84-4, 86-1 à 86-4, 98, 100, 102-1 à 102-4) peut être alimentée, au choix en huile de lubrification ou en graisse de lubrification, par l'intermédiaire d'un raccord d'alimentation de lubrifiant (84-1 à 84-4) commun.

31. Dispositif de guidage linéaire selon la revendication 29 ou 30,
**caractérisé en ce que**
les raccords d'alimentation de lubrifiant (84-1 à 84-4) sont montés sur une pièce en matière plastique, en particulier sur une unité de tête (32) du chariot de guidage (14).

32. Dispositif de guidage linéaire selon la revendication 31,
**caractérisé en ce que**
les raccords d'alimentation de lubrifiant (84-1 à 84-4) comportent une pluralité de raccords d'alimentation de lubrifiant (84-1 à 84-4), et **en ce que** sur la pièce en matière plastique (32) est montée une pièce de renfort (40), en particulier en matériau métallique, laquelle porte des composants de branchement (148) pour les raccords d'alimentation de lubrifiant (84-1 à 84-4).

33. Dispositif de guidage linéaire selon la revendication 32,
**caractérisé en ce que**
les composants de branchement (148) sont réalisés sous forme de manchons taraudés qui concordent avec une forure de raccordement de chacun des raccords d'alimentation de lubrifiant (84-1 à 84-4).
